# EUROPÄISCHE PATENTSCHRIFT

(11) **EP 2 500 446 B1**
(45) Veröffentlichungstag und Bekanntmachung des Hinweises auf die Patenterteilung: **28.05.2014**
(21) Anmeldenummer: 12154267.4
(22) Anmeldetag: 07.02.2012
(51) Int. Cl.: B05B 7/20, B05B 13/02, B65G 49/00, C23C 4/00, C23C 4/12, B05B 13/00, B25J 9/00, C23C 14/50, C23C 16/458

(54) **Bauteilmanipulator zur dynamischen Positionierung eines Substrats, Beschichtungsverfahren, sowie die Verwendung eines Bauteilmanipulators**
Manipulator for the dynamic positioning of a substrate, coating method and the use of a manipulator
Manipulateur pour le positionnement dynamique d'un substrat, procédé de revêtement, et l'utilisation d'un manipulateur

(30) Priorität: 17.03.2011 EP 11158579
(43) Veröffentlichungstag der Anmeldung: 19.09.2012
(73) Patentinhaber: Sulzer Metco AG, 5610 Wohlen (CH)
(72) Erfinder: Müller, Markus, 5606 Dintikon (CH)
(74) Vertreter: Intellectual Property Services GmbH

(56) Entgegenhaltungen:
- EP-A1- 2 025 772
- EP-A1- 2 048 263
- EP-B1- 1 495 151
- DE-A1- 19 803 278

## Beschreibung

Die Erfindung betrifft einen Bauteilmanipulator zur dynamischen Positionierung eines in einem thermischen Behandlungsprozess zu behandelnden Substrats, ein Beschichtungsverfahren unter Verwendung eines Bauteilmanipulators, sowie die Verwendung eines Bauteilmanipulators zur Beschichtung eines Substrats mittels eines thermischen Beschichtungsverfahrens gemäss dem Oberbegriff des unabhängigen Anspruchs der jeweiligen Kategorie.

Die EP 2 048 263 A1 beschreibt einen Bauteilmanipulator in Form einer Werkstückträgereinrichtung. Die Werkstückträgereinrichtung umfasst ein Drehgestell und ein Antriebsteil, welche beide um eine Antriebsachse drehbar sind. Das Drehgestell ist durch einen Motor antreibbar und trägt mehrere um die Antriebsachse verteilte und um Halterachsen drehbare Werkstückhalter. Die Werkstückträgereinrichtung ist so ausgeführt, dass auf einfache Weise ein Übersetzungsverhältnis zwischen der Drehung der Werkstücke und der des Drehgestells einstellbar ist.

Die DE 198 03 278 A1 beschreibt einen Bauteilmanipulator in Form eines Werkstückträgers, welcher um eine Längsachse drehbar ist. Der Werkstückträger verfügt über eine Trägerstruktur zur Aufnahme von Werkstücken, die sich radial von der Längsachse weg erstreckt. Die Trägerstruktur ist so ausgeführt, dass sich die Werkstücke definiert drehen, wobei die Drehung der Werkstücke und die des Werkstückträgers mechanisch fest gekoppelt sind.

Die Beschichtung von Oberflächen verschiedenster Werkstücke hat in der industriellen Technik eine fast unübersehbare Zahl von Anwendungen und eine entsprechend hohe wirtschaftliche Bedeutung. Dabei können Beschichtungen aus sehr unterschiedlichen Gründen vorteilhaft auf die verschiedensten Substrate aufgebracht werden. Eine grosse Rolle spielen zum Beispiel Verschleissschutzschichten auf mechanisch stark belasteten Teilen wie zum Beispiel auf Laufflächen von Zylindern oder Kolbenringen von Verbrennungskraftmaschinen oder Kompressoren. An solche Teile werden neben der Verschleissfestigkeit auch weitere Anforderungen, wie gute Gleiteigenschaften, d.h. gute tribologische Eigenschaften oder auch ausgezeichnete Trockenlaufeigenschaften gestellt. Für solche und ähnliche Anforderungen haben sich insbesondere verschiedene thermische Spritzverfahren, vor allem die bekannten Plasmaspritzverfahren hervorragend bewährt.

Zur Erzeugung von Hartschichten auf hoch belasteten Werkzeugen, vor allem Span abhebende Werkzeuge wie Fräser, Bohrer usw. sind Beschichtungen hergestellt durch Lichtbogenverdampfung, PVD oder CVD Prozesse sehr erfolgreich eingesetzt worden. Gerade die Anwendung der zuletzt genannten Prozesse ist aber auch auf ganz anderen Gebieten sehr weit verbreitet, z.B. zum Beschichten von Schmuck oder Uhrengehäusen oder zum Aufbringen von Schutzbeschichtungen oder einfach zur Verschönerung von Gebrauchsgegenständen.

Auch andere Verfahren, wie zum Beispiel das Gasnitrieren sind wohl etablierte Methoden, die unter anderem im Korrosionsschutz eine grosse Bedeutung haben.

Grundsätzlich problematisch ist dabei die Beschichtung von sehr grossflächigen Werkstücken, oder von Bauteilen mit komplizierter Oberflächengeometrie.

Grundsätzliche hat sich auch für diese eher problematischen Fälle das thermische Spritzen in unterschiedlichen Varianten durchgesetzt, vor allem weil das thermische Spritzen seit langem in der Einzelteil- und industriellen Serienfertigung etabliert ist. Die gängigsten thermischen Spritzverfahren, die insbesondere auch in der Serienfertigung zur Beschichtung von Oberflächen von Substraten in grosser Stückzahl Anwendung finden, sind z.B. das Flammspritzen mit einem Spritzpulver oder einem Spritzdraht, das Lichtbogenspritzen, das Hochgeschwindigkeitsflammspritzen (HVOF), das Flammschockspritzen oder das Plasmaspritzen. Die zuvor genannte Liste von thermischen Spritzverfahren ist sicher nicht abschliessend. Vielmehr kennt der Fachmann eine grosse Zahl von Varianten der aufgezählten Verfahren, sowie weitere Verfahren, z.B. Sonderverfahren wie das Flammspritzschweissen. Auch das sogenannte oder "Kaltgasspritzen" muss in diesem Zusammenhang genannt werden.

Dabei hat sich das thermische Spritzen weite Anwendungsbereiche erschlossen. Man kann durchaus feststellen, dass das thermische Spritzen als Oberflächenbeschichtungsverfahren, was seine Einsatzmöglichkeiten betrifft, die Beschichtungstechnik mit der wahrscheinlich grössten Anwendungsbreite ist. Eine Abgrenzung der Einsatzbereiche der zuvor aufgelisteten Spritzverfahren scheint dabei nicht unbedingt sinnvoll, weil die Einsatzbereiche ineinander übergreifen können.

Dabei war es lange ein Problem Bauteile mit einer komplizierten Oberflächengeometrie in ausreichender Gleichmässigkeit zu versehen. Ein typisches Beispiel für solche Teile sind Turbinenschaufeln für Land- oder Luft gestützte Turbinen bzw. Triebwerke für Luftfahrzeuge aller Art.

Einen Durchbruch hat hier das zum Beispiel in der EP 0776 594 B1 von Sulzer Metco vorgeschlagene thermische Niederdruck-Verfahren ("LPPS-Verfahren") gebracht, das mit einem breiten Plasmastrom die Herstellung einheitlicher Beschichtungen nicht nur auf geometrisch komplizierten Bauteilen, sondern auch auf grossen Flächen, z.B. auf Blechen gestattet. Das wird einerseits durch die geometrische Ausgestaltung der Spritzpistole erreicht, wobei es aber zudem wesentlich ist, dass zwischen dem Inneren und dem Äusseren der Spritzpistole ein wesentlicher Druckunterschied herrscht. Das Werkstück, oder zumindest der zu beschichtende Oberflächenbereich des Werkstücks befindet sich dabei in einer Beschichtungskammer, in der, in Bezug auf das Innere der Spritzpistole, ein Unterdruck hergestellt wird, z.B. eine Unterdruck von weniger als 100 mbar, während in der Spritzpistole z.B. ein Druck von ca. 1000 mbar, also ungefähr Umgebungsdruck herrscht. Durch die Einstellung eines solchen Druckgefälles zwischen dem Inneren der Spritzpistole und der Beschichtungskammer kann ein breiter und langer Beschichtungsstrahl erzeugt werden, mit welchem die Oberfläche des Werkstücks in zuvor nicht erreichbarer Gleichmässigkeit beschichtet werden kann.

Ein wesentlicher Vorteil dieses Verfahrens besteht dabei insbesondere darin, dass auch in einem gewissen Umfang Beschichtungen in Bereichen möglich werden, die im "Schatten" des Beschichtungsstrahls liegen und daher bei Verwendung von konventionellen Plasmabeschichtungsverfahren kaum erreichbar sind; zumindest können solche Bauteile mittels konventioneller Beschichtungsverfahren nicht auf allen Flächen ausreichend gleichmässig beschichtet werden und insbesondere können die Schichten auf denjenigen Flächen, die in Bezug auf den Beschichtungsstrahl in einem abgeschatteten Bereich liegen, nicht in ausreichender Qualität erzeugt werden.

Dabei ist dieses grundlegende Prinzip inzwischen wesentlich weiterentwickelt worden. Die EP 1 479 788 A1 zeigt zum Beispiel ein hybridisches Verfahren, das auf dem grundlegenden Verfahren der EP 0776 594 B1 aufbaut.

Diese Verfahren sind dabei besonders geeignet verschiedene metallische oder nicht metallische Beschichtungen, insbesondere auch keramische, karbidische oder nitridische Schichtkomponenten in dünnen Schichten aufzubringen.

Vor allem für die Beschichtung von Turbinenschaufeln hat sich dabei der sogenannte LPPS-Dünnfilm-Prozess (PS-TF) von Sulzer Metco durchgesetzt, der das Niederdruck Plasmaspritzen seinerzeit regelrecht revolutioniert hat. Es handelt sich dabei um ein konventionelles LPPS-Plasmaspritzverfahren, das verfahrenstechnisch abgewandelt wurde. Dabei wird ein von Plasma durchströmter Raum ("Plasmaflamme" oder "Plasmastrahl") durch geeignete Einstellung der Spritzparameter, insbesondere der Druckparameter in der Prozesskammer und in der Plasmaflamme bzw. dem Plasmastrahl selbst, ausgeweitet und auf eine Länge von bis zu 2.5 m ausgedehnt. Die geometrische Ausdehnung des Plasmas führt zu einer gleichmässigen Aufweitung - einer "Defokussierung" - eines Pulverstrahls, der mit einem Fördergas in das Plasma injiziert wird. Das Material des Pulverstrahls, das im Plasma zu einer Wolke dispergiert und dort teilweise oder vollständig geschmolzen wird, gelangt gleichmässig verteilt auf eine weit ausgedehnte Oberfläche eines Substrats. Es entsteht auf dem Substrat eine dünne Lage, deren Schichtdicke kleiner als 10 µm sein kann und die Dank der gleichmässigen Verteilung eine dichte Abdeckung bildet. Durch mehrfachen Auftrag von dünnen Lagen kann eine dickere Beschichtung mit besonderen Eigenschaften hergestellt werden, was eine solche Beschichtung als Funktionsschicht verwendbar macht. Beispielsweise ist mit einem Mehrfachauftrag eine poröse Beschichtung herstellbar, die sich als Träger für katalytisch aktive Stoffe eignet (siehe EP-A- 1 034 843).

Betrachten wir als Beispiel eine Turbinenschaufel, so umfasst eine Funktionsschicht, die auf einen die Turbinenschaufel bildenden Grundkörper aufgebracht wird, in der Regel verschiedene Teilschichten. Beispielsweise werden für eine Gasturbine (stationäre Gasturbine oder Flugzeugtriebwerk), die bei hohen Prozesstemperaturen betrieben wird, die Schaufeln mit einer ersten ein- oder mehrlagigen Teilschicht beschichtet, die eine Beständigkeit gegen Heissgaskorrosion herstellt. Eine zweite Beschichtung, die auf die erste Teilschicht aufgebracht wird und für die keramisches Material verwendet wird, bildet eine Wärmedämmschicht. Die früher bekannten LPPS-Plasmaspritzverfahren eigneten sich besonders gut für die Herstellung der ersten Schicht. Die Wärmedämmschicht wurde bisher vorteilhafterweise mit einem Verfahren erzeugt, bei dem eine Beschichtung mit einer kolumnaren Mikrostruktur entsteht. Die so strukturierte Schicht setzt sich angenähert aus zylindrischen Körperchen oder Korpuskeln zusammen, deren Zentralachsen senkrecht zur Substratoberfläche ausgerichtet sind. Übergangsbereiche, in denen die Dichte des abgeschiedenen Materials kleiner als in den Korpuskeln ist, begrenzen die Korpuskeln seitlich. Eine Beschichtung, die solcherart eine anisotrope Mikrostruktur aufweist, ist dehnungstolerant gegenüber wechselnden Spannungen, die sich aufgrund von wiederholt auftretenden Temperaturänderungen ergeben. Die Beschichtung reagiert auf die wechselnden Spannungen auf eine weitgehend reversible Weise, d.h. ohne eine Ausbildung von Rissen, so dass ihre Lebensdauer beträchtlich verlängert ist im Vergleich mit der Lebensdauer einer üblichen Beschichtung, die keine kolumnare Mikrostruktur hat.

Die anisotrope Mikrostruktur ist mit einem Dünnfilmverfahren erzeugbar, das ein Aufdampfverfahren ist. Bei diesem Verfahren, das man mit "EB-PVD" (Electron Beam - Physical Vapor Deposition) bezeichnet, wird die für die Wärmedämmschicht abzuscheidende Substanz in einem Hochvakuum mit einem Elektronenstrahl in die Dampfphase gebracht und aus dieser auf den zu beschichtenden Bauteil auskondensiert. Werden die Prozessparameter geeignet gewählt, so ergibt sich eine kolumnare Mikrostruktur. Ein Nachteil dieses Aufdampfverfahrens sind unter anderem sehr hohe Anlagenkosten. Es kommt hinzu, dass bei der Herstellung einer mehrere Teilschichten umfassenden Beschichtung nicht die gleiche Anlage für das LPPS-Plasmaspritzverfahren und den EB-PVD-Prozess eingesetzt werden kann. Für die Beschichtung sind daher mehrere Arbeitszyklen durchzuführen.

Diese Probleme wurden von Sulzer Metco erstmals durch die Erfindung gemäss EP 1 495 151 B1 überzeugend gelöst, wodurch erstmals ein Plasmaspritzverfahren zur Verfügung gestellt wurde, mit dem eine Wärmedämmschicht herstellbar ist und das erlaubt, eine die Wärmedämmschicht als Teilschicht umfassende Beschichtung in einem Arbeitszyklus auf eine Turbinenschaufel aufzubringen.

Das wurde durch ein neues Plasmaspritzverfahren erreicht, bei dem ein zu beschichtendes Material in Form eines Pulverstrahls auf eine Oberfläche eines metallischen Substrats, insbesondere auf eine Turbinenschaufel aufgespritzt wird. Es wird dabei bei einem niedrigen Prozessdruck, der kleiner als 100 mbar ist, das Beschichtungsmaterial in ein den Pulverstrahl defokussierendes Plasma injiziert und dort teilweise oder vollständig geschmolzen. Dabei wird ein Plasma mit ausreichend hoher spezifischer Enthalpie erzeugt, so dass ein substanzieller, mindestens 5 Gew-% betragender Anteil des Beschichtungsmaterials in die Dampfphase übergeht und auf dem Substrat eine anisotrop strukturierte Schicht entsteht. In dieser Schicht sind längliche Korpuskeln, die eine anisotrope Mikrostruktur bilden, weitgehend senkrecht zur Substratoberfläche stehend ausgerichtet. Materialarme Übergangsbereiche begrenzen die Korpuskeln gegeneinander. Das Verfahren gemäss EP 1 495 151 B1 weist dabei gegenüber dem bekannten Verfahren, mit dem eine kolumnar strukturierte Schicht mittels EB-PVD hergestellt wird, einen weiteren entscheidenden Vorteil auf: Die Prozesszeiten für gleich dicke Schichten sind deutlich kürzer.

Derweil wurde das Verfahren gemäss EP 1 495 151 B1 von Sulzer Metco entscheidend verbessert und weiterentwickelt und ist unter der Kurzbezeichnung PS-PVD inzwischen am Markt etabliert. Da der im Rahmen dieser Anmeldung beanspruchte Bauteilmanipulator besonders vorteilhaft in Zusammenhang mit dem beanspruchten Beschichtungsverfahren verwendet werden kann, das vorzugsweise das an sich bekannte PS-PVD Verfahren ist, soll dieses im folgenden eingehend beschrieben werden, so dass die folgende Beschreibung des PS-PVD Verfahrens einen Teil der Beschreibung der vorliegenden Erfindung bildet.

Es versteht sich dabei von selbst, dass der Bauteilmanipulator der vorliegenden Erfindung selbstverständlich zur Verwendung in jedwedem thermischen Behandlungsprozess und damit im Prinzip insbesondere auch bei jedem Beschichtungsverfahren vorteilhaft verwendet werden kann.

PS-PVD, das als Abkürzung für "Plasma spray - physical vapor deposition" steht, ist eine Niederdruck Plasmaspritztechnologie zur Abscheidung von Beschichtungen aus der Dampfphase. PS-PVD ist dabei ein Teil einer Familie von neuen hybridischen Prozessen, die die Anmelderin in letzter Zeit auf der Basis der oben beschriebenen LPPS Technology entwickelt hat (Journal of Thermal Spray Technology, 502, Vol. 19(1-2) January 2010). Dabei umfasst diese Familie neben PS-PVD unter anderem auch "plasma spray - chemical vapor desposition" (PS-CVD) und "plasma spray - thin film" (PS-TF) Prozesse. Im Vergleich zum konventionellen Vakuum Plasmaspritzen bzw. zum konventionellen LPPS Prozess zeichnen sich diese neuen Prozesse durch die Verwendung einer Hochenergie Plasmapistole aus, die unter einen Arbeitsdruck von weniger als 2 mbar betrieben wird. Das führt zu einer unkonventionellen Plasmastrahl Charakteristik, die für die Herstellung von einzigartigen spezifischen Beschichtungen eingesetzt werden kann. Eine wichtige neue Eigenschaft des PS-PVD Prozesses ist die Möglichkeit Beschichtungen nicht nur aus geschmolzenem flüssigen Material zu bilden, indem die Schichten durch sogenannte flüssige "Splats", die beim Auftreffen auf dem Substrat erstarren, aufgebaut werden. Sondern PS-PVD gestattet auch den Aufbau von Beschichtungen direkt aus der Dampfphase. Somit füllt PS-PVD die Lücke zwischen konventionellen PVD Techniken und den Standard Techniken des thermischen Spritzens. Die Möglichkeit das Beschichtungsmaterial in die Dampfphase zu überführen und dadurch Schichten direkt aus der Dampfphase abzuscheiden eröffnet völlig neue Möglichkeiten andere einzigartige Schichten bzw. Schichtsysteme mit neuartiger Struktur aufzubauen.

Die Eigenschaften dieser neuen Schichtstrukturen sind den bisher bekannten in vielerlei Hinsicht deutlich überlegen, insbesondere zu den Schichten, die mittels EP-PVD hergestellt sind. Allen thermischen Spritzprozessen ist nämlich gemeinsam, dass, wie bereits erwähnt, die Schichten aus geschmolzenem Material, von den vorgenannten "Splats", also letztlich durch ein Einfrierprozess des flüssigen Spritzmaterial auf der Oberfläche des Substrats gebildet werden. Das im Gegensatz zu den klassischen PVD Prozessen, bei welchen die Beschichtungen auf dem Substrat in einer Prozesskammer aus der Dampfphase heraus gebildet werden, indem das Beschichtungsmaterial unter niedrigem Druck, von z.B. ca. 10⁻⁴ mbar in der Prozesskammer zunächst in die Dampfphase überführt wird. Das heisst, das heisse Beschichtungsmaterial wird nicht auf die kalte Substratoberfläche aus der flüssigen Phase heraus abgeschieden, sondern es kondensiert aus der Dampfphase heraus auf der Substratoberfläche. Das führt zu ganz charakteristischen Eigenschaften der Beschichtung, die mit herkömmlichen thermischen Spritzverfahren nicht erreicht werden können. PVD Schichten können bekanntermassen sehr homogen sein, dabei sehr dünn, dicht, hart und gasdicht oder können spezielle, vorgebbare Mikrostrukturen aufweisen.

Die kolumnare Struktur von Yttrium stabilisiertem Zirkonium (YSZ), das mittels EP-PVD (electron beam - physical vapor deposition) abgeschieden wird, ist zum Beispiel besonders gut für Wärmedämmschichten (TBC) geeignet, die sehr spannungsarm bzw. spannungstolerant sein müssen.

Der entscheidende Nachteil der PVD Verfahren im Vergleich zum thermischen Spritzen sind die hohen Investitionskosten und die niedrigen Abscheideraten und damit hohe Prozesskosten. Daher werden PVD Prozesse hauptsächlich für sehr dünne Schichten und in der Massenproduktion eingesetzt. Oder eben auch zur Beschichtung von sehr wertvollen oder sicherheitsrelevanten Teilen wie zum Beispiel von Laufschaufeln oder Leitschaufeln von Turbinen von Luftfahrzeugen.

Ausserdem können mittels konventioneller PVD Techniken nur Flächen beschichtet werden, die in direkter Sichtlinie zur Beschichtungsquelle liegen, also nicht in einem in Bezug auf die Beschichtungsquelle abgeschatteten Bereich liegen. Es war daher bisher immer sehr schwierig, bzw. früher unmöglich, Komponenten mit Hinterschnitten bzw. komplexer Geometrie, wie zum Beispiel Turbinenschaufeln mit homogenen Schichten hoher Qualität und vorgegebener Mikrostruktur effektiv und kosteneffizient zu beschichten.

Es war daher ein seit langem bestehendes Bedürfnis im Stand der Technik eine Vorrichtung und ein Verfahren zur Verfügung zu haben, das die Vorteile des thermischen Spritzens und des PVD Prozesses in einem Prozess vereint. Dies ist Sulzer Metco durch den kürzlich entwickelten PS-PVD Prozess gelungen, der eine Weiterentwicklung des ursprünglichen LPPS Prozesses ist, und der erstmals ein Verfahren bereitstellt, mit welchem aus der Dampfphase mittels thermischen Spritzens beschichtet werden kann, so dass Beschichtungen hoher Qualität, mit vorgebbarer Mikrostruktur und vorgebbaren Eigenschaften sehr effizient, zu niedrigen Kosten und in grossen Stückzahlen hergestellt werden können. Dieses neue Verfahren ist insbesondere in der Lage, auch Oberflächenbereich gleichmässig und in der gewünschten Dicke und Qualität zu beschichten, die in Bezug auf die Beschichtungsquelle in abgeschatteten Bereichen, also nicht direkt in Sichtlinie zur Beschichtungsquelle liegen.

Der PS-PVD Prozess wird dabei ähnlich wie LPPS unter einer definierten Prozessatmosphäre unter in Bezug auf den atmosphärischen Umgebungsdruck reduziertem Gasdruck, typischerweise in einer Inertgasatmosphäre, zum Beispiel unter Argon Gas in einer Prozesskammer durchgeführt. Typische Prozessgasdrücke liegen zwischen 0.5 mbar und 2 mbar Durch den reduzierten Druck in der Prozesskammer wird die Plasmaflamme bzw. der Plasmastrahl z.B. auf eine Länge von mehr als 2 m und von 200 mm bis zu 400 mm Durchmesser aufgebläht, wobei bei geeigneter Wahl der Prozessparameter auch durchaus noch grössere Plasmaflammen einstellbar sind. Durch die Aufblähung der Plasmaflamme bzw. des Plasmastrahls wird insbesondere eine sehr homogene Verteilung der Temperatur und der Partikelgeschwindigkeiten in der Plasmaflamme erzielt, so dass auch auf sehr komplexen Bauteilen, wie zum Beispiel auf Turbinenschaufeln, Schichten von sehr gleichmässiger Dicke, auch in abgeschatteten Oberflächenbereichen erzeugt werden können.

Bevorzugt wird dabei die Oberfläche des Substrates vorgeheizt bzw. gereinigt. Das kann beispielweise mittels des Plasmastrahls geschehen oder mitttels eines in die Prozesskammer integrierten Arc- Prozesses geschehen.

Obwohl der PS-PVD Arbeitsdruck von z.B. einem 1 mbar deutlich höher ist als der Arbeitsdruck von ca. 10⁻⁴ mbar, wie er bei klassischen PVD Verfahren verwendet wird, führt beim PS-PVD Prozess die Kombination von tiefem Prozessdruck und hoher Plasmaenergie bzw. Enthalpie der Plasmaflamme bzw. des Plasmastrahls zu einer definierten Verdampfung des in die Plasmaflamme injizierten Pulvers und erlaubt daher eine kontrollierte Abscheidung aus der Dampfphase.

Im Gegensatz dazu ist in einem EB-PVD Prozess der Transport des verdampften Materials in Richtung zur Substratoberfläche ein Diffusionsprozess mit beschränkter Durchsatzrate und damit letztlich auch mit beschränkter Wachstumsgeschwindigkeit der aufzutragenden Oberflächenschichten. Anders beim PS-PVD Prozess, der das verdampfte Beschichtungsmaterial in einem Plasmastrahl mit Überschallgeschwindigkeit von ca. 2000 m/s bis 4000 m/s bei einem Druck von ca. 1 mbar und einer Temperatur con ca. 6.000 K bis 10.000 K transportiert. Das führt zu hohen Wachstumsgeschwindigkeiten der Schichten auf dem Substrat und der Möglichkeit auch Hinterschnitte oder abgeschattete Fläche des Substrats in gleichbleibend hoher Qualität zu beschichten.

Damit ermöglichst es der PS-PVD Prozess erstmals auch sehr komplizierte geformte Teile, wie beispielsweise Turbinenschaufeln in vorher nicht gekannter Qualität, automatisiert und in grossen Stückzahlen zum Beispiel mit Wärmedämmschichtsystemen effizient zu beschichten.

Allerdings verlangt ein zunehmender Kostendruck auch hier weitere Verbesserungen. Eine wesentliche Eigenschaft des oben besprochenen Prozesses besteht nämlich darin, dass das zu beschichtende Bauteil in bestimmten Grenzen mehr oder weniger gleichmässig temperiert sein muss. Das geschieht zum Beispiel bei dem bekannten EP-PVD Verfahren dadurch, dass in den Kammerwänden der Prozesskammer in der der Beschichtungsprozess durchgeführt wird, eine Heizung vorgesehen wird, die das zu beschichtende Bauteil von mehreren Seiten in gewissen Grenzen gleichmässig temperiert, was natürlich ein weiterer Nachteil des EP-PVD Verfahrens ist, weil zusätzlich die relativ aufwändige Heizung in der Kammerwand vorgesehen und natürlich auch betrieben werden muss. Beim LPPS-Verfahren allgemein und im besonderen beim PS-PVD Verfahren wird das Bauteil nur durch den Beschichtungsstrahl vorgeheizt, was den Vorteil hat, dass die zusätzliche Heizung in der Kammerwand eingespart wird, aber natürlich auch zu einem sehr inhomogenen Temperaturfeld innerhalb der Beschichtungskammer führt. Daher ist es bekannt, dass wenn die Ausdehnung des zu beschichtenden Bauteils derart ist, dass es vom Beschichtungsstrahl nicht mehr ausreichend gleichmässig temperiert werden kann, zum Beispiel wenn die Ausdehnung des zu beschichtenden Teils so gross ist, dass der Beschichtungsstrahl die Oberfläche des Bauteils nur noch teilweise abdeckt bzw. umhüllt, den Beschichtungsstrahl über das Bauteil in einem vorgebbaren Winkelbereich mit ausreichender Geschwindigkeit hin und her zu bewegen, so dass nacheinander alle Oberflächen des Bauteils während dem Beschichten periodisch vom Beschichtungsstrahl überstreichen werden, so das nacheinander und immer wieder alle Oberflächenbereiche dem Beschichtungsstrahl derart ausgesetzt werden, dass die gesamte Oberfläche einerseits gleich mässig beschichtet wird und andererseits das zu beschichtende Bauteil in vorgegebenen Parametergrenzen ausreichend gleichmässig temperiert bzw. vorgeheizt wird. Diese mehr oder weniger periodische Bewegung des Beschichtungsstrahls zum Überstreichen des zu beschichtenden Substrats wird auch häufig als "Sweepen" des Beschichtungsstrahls bezeichnet.

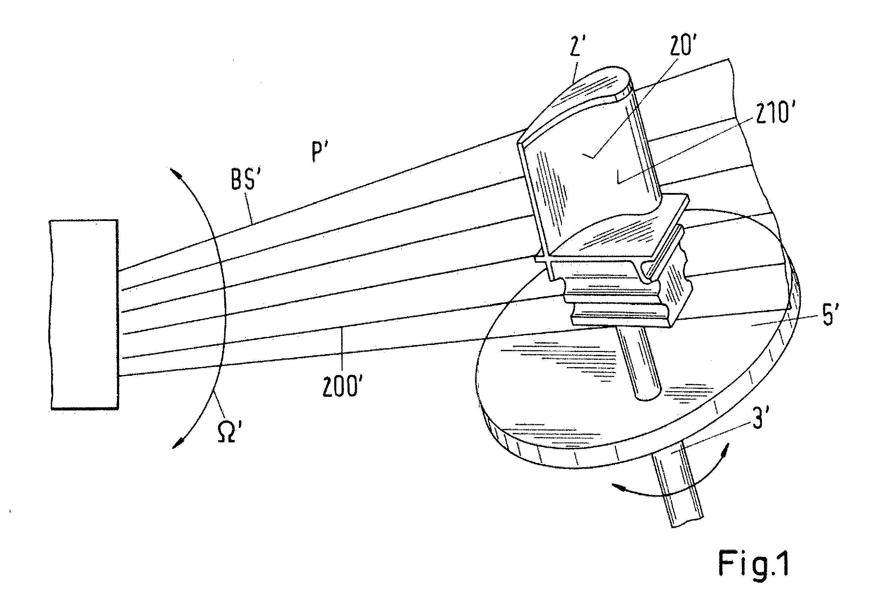

Um den Effekt des gleichmässigen Temperierens und Beschichtens noch zu verbessern, ist es darüber hinaus bekannt, z.B. eine Turbinenschaufel auf einem drehbaren Substrathalter zu montieren, so dass gleichzeitig mit dem Sweepen des Beschichtungsstrahls das Substrat noch um eine Drehachse gedreht wird, so dass das Substrat nacheinander von allen Seiten vom Beschichtungsstrahl direkt beaufschlagt wird. Diese an sich bekannte Vorrichtung ist zur Verdeutlichung anhand der Fig. 1 nochmals erläutert.

In Fig. 1 ist schematisch ein aus dem Stand der Technik bekanntes Verfahren zur Beschichtung einer Turbinenschaufel eines Flugzeugtriebwerks dargestellt.

Es sei darauf hingewiesen, dass zur besseren Unterscheidung der Erfindung vom Stand der Technik die Bezugszeichen in Fig. 1, die sich auf ein bekanntes Verfahren bezieht, mit einem Hochkomma versehen sind, während die Bezugszeichen in den übrigen Figuren, die sich auf die Erfindung beziehen, kein Hochkomma tragen.

Die Fig. 1 zeigt ein aus dem Stand der Technik wohlbekanntes Verfahren zur Herstellung einer funktionalen strukturierten Schicht 20' auf einem Substrat 2', das hier eine Turbinenschaufel 2' für ein Flugzeug ist, bei welchem in einer Prozesskammer, die in Fig. 1 aus Gründen der Übersichtlichkeit nicht näher dargestellt ist, unter einem vorgegebenen niedrigen Prozessdruck P' mittels eines Plasmaspritzverfahrens ein Beschichtungsmaterial 200' in Form eines Beschichtungsstrahls BS' auf eine Oberfläche 210' des Substrats 2' aufgespritzt wird. Das Beschichtungsmaterial 200' wird dabei bei dem niedrigen Prozessdruck P', der z.B. ca. 1 mbar sein kann, in ein den Beschichtungsstrahl BS' defokussierendes Plasma injiziert und dort teilweise oder vollständig geschmolzen, wobei ein Plasma mit ausreichend hoher spezifischer Enthalpie erzeugt wird, sodass ein substanzieller möglichst hoher Anteil des Beschichtungsmaterials 200' in die Dampfphase überführt wird und auf dem Substrat 2' die strukturierte Schicht 20' gebildet wird. Um eine möglichst gleichmässige Beschichtung der Turbinenschaufel 2' zu erreichen, ist diese auf einem um eine Drehachse 3' rotierbaren Substratteller 5' angeordnet und im Beschichtungsstrahl BS' gedreht. Gleichzeitig wird der Beschichtungsstrahl BS' in einem Raumwinkelbereich Ω' hin und her über die zu beschichtende Turbinenschaufel 3' geschwenkt.

Aber leider war es bisher immer nur möglich höchstens ein einziges, nicht all zu grosses Substrat auf diese Weise mittels PS-PVD zu beschichten.

Räumlich ausgedehnte Substrate, die so gross sind, das deren Oberflächen beim Sweepen des Beschichtungsstrahls nicht vollständig vom Beschichtungsstrahl erfasst werden, oder die eine derart asymmetrische Geometrie haben, dass bestimmte Oberflächenbereiche z.B. beim Drehen auf dem Drehteller soweit aus der Strahlachse des Beschichtungsstrahls herausgedreht wurden, dass der Beschichtungsstrahl diese nicht mehr erreicht, konnten bisher mit dem PS-PVD Verfahren nicht befriedigend beschichtet werden. Da der Winkelbereich über den der Beschichtungsstrahl in der Beschichtungskammer maximal geschwenkt werden kann natürlich beschränkt ist und gleichzeitig das zu beschichtende Substrat einen beachtlichen Abstand zur Spritzpistole haben muss, die den Beschichtungsstrahl erzeugt, war man bisher in Fachkreisen der Auffassung, dass gar mehrere Substrate, die man theoretisch auf einem drehbaren Substrathalter platzieren könnte mit dem bekannten PS-PVD Verfahren nicht gleichzeitig in einem Arbeitsgang beschichtet werden können.

Nämlich selbst wenn durch geeignete Drehung des drehbaren Substrathalters bei gleichzeitiger geeigneter Schwenkbewegung des Beschichtungsstrahls nacheinander alle Flächen vom Beschichtungsstrahl erreicht werden können, ist man bisher davon ausgegangen, dass trotzdem auf den Substraten keine gleichmässigen Schichten mit dem PS-PVD Verfahren auf die Substrate aufgetragen werden können.

Der Grund für diese Annahme hat dabei fundierte physikalische Grundlagen. Wie oben bereits beschrieben ist es beim LPPS-Verfahren, im speziellen beim PS-PVD Verfahren nämlich wesentlich, dass die Substrate vom Beschichtungsstrahl möglichst gleichmässig vorgeheizt werden. D.h., dass das zu beschichtende Substrat zumindest im kurzzeitlichen Mittel im wesentlichen ständig vom Beschichtungsstrahl komplett beaufschlagt wird. Im zeitlichen Mittel heisst dabei, dass z.B. beim Sweepen des Beschichtungsstrahl oder beim Drehen des Substrathalters bestimmte Oberflächenbereiche des Substrats nur für so kurze Zeit aus dem Beschichtungsstrahl nicht ausgesetzt sind, dass die Temperatur dieser Oberflächenbereich nur unwesentlich im Vergleich zur Temperatur derjenigen Oberflächenbereiche absinkt, die dem Beschichtungsstrahl ausgesetzt sind. Ansonsten entstehen im Substrat so grosse Temperaturgradienten oder die Temperatur der zeitweise nicht mit dem Beschichtungsstrahl beaufschlagten Oberflächenbereiche sinkt soweit ab, dass keine Schichten von der notwendigen hohen Qualität mehr aufgebracht werden können.

Insbesondere wenn z.B. eines der auf dem Substrathalter vorgesehen Substrate zeitweise mehr oder weniger ganz der Beaufschlagung durch den Beschichtungsstrahl entzogen wird, werden sich die entsprechenden Substrate soweit abkühlen, dass dann, wenn Sie wieder vom Beschichtungsstrahl zum Beschichten beaufschlagt werden, eine Beschichtung gemäss den hohen Qualitätsanforderungen nicht mehr möglich ist.

Dieser negative Effekt wird bei sehr kompliziert geformten Substraten, die sehr tief liegende oder verschachtelte Hinterschnitte aufweisen, oder in anderer Weise kompliziert geformt sind, wie zum Beispiel Doppelschaufeln für moderne, extrem hoch belastete Flugzeugturbinen, noch massiv verschärft, da z.B. abgeschattete Oberflächenbereich noch seltener oder weniger lang vom Beschichtungsstrahl aufgeheizt werden, so dass eine ausreichend gleichmässige Beschichtung mit höchsten Anforderungen an Schichtqualität und Schichtaufbau nicht mehr möglich ist.

Dabei sind die vorgenannten Probleme nicht nur dann zu befürchten, wenn versucht wird, mehrere Substrate gleichzeitig in ein und demselben Beschichtungsstrahl zu beschichten.

Selbst dann, wenn nur ein einziges Substrat im Beschichtungsstrahl angeordnet wird, treten die oben beschriebenen Probleme immer noch auf. Ein wesentlicher Grund dafür sind die bekannten Substrathalter, die nur eine sehr eingeschränkte Art der Positionierung des zu beschichtenden Substrats im Beschichtungsstrahl erlauben.

Das hängt in erster Linie damit zusammen, dass die Behandlung der Substrate unter schwierigen Umgebungsbedingungen stattfindet. So findet die Behandlung nicht selten in staubiger Umgebung, unter hohem oder niedrigem Druck und vor allem bei hohen Temperaturen von z.B. bis zu 1000°C oder noch höher statt.

Die bekannten Substrathalter sind daher sehr einfach aufgebaut mit möglichst wenigen beweglichen Teilen, da zum Beispiel bekannte Lager, die notwendig wären um den Substrathalter derart auszugestalten, das das Bauteil um zusätzliche Achsen drehbar oder schwenkbar ist, gar nicht oder nur für sehr kurze Zeit den aggressiven Umgebungsbedingungen, insbesondere den Hohen Temperaturen ausgesetzt werden könnten. Da häufig aber sehr lange Behandlungszeiten notwendig sind, bei thermischen Beschichten zum Beispiel kann der Beschichtungsvorgang durchaus eine Stunde oder mehr dauern, würden Substrathalter mit bekannten Lagern zum Drehen oder Schwenken der Substrate bereits nach kurzer Zeit ihren Dienst versagen. Daher sind bisher nur sehr einfache Substrathalter verfügbar, die eine dynamische Positionierung des Substrats nur sehr eingeschränkt gestatten.

Ein weiterer Nachteil der bekannten Substrathalter ist die mangelnde thermische Entkopplung des zu behandelnden Substrats vom Substrathalter. Dies führt zum Beispiel beim thermischen Beschichten dazu, dass ein erheblicher und oft auch noch ungleichmässiger Temperaturabfluss vom zu behandelnden Substrat, also zum Beispiel einer thermisch zu beschichtenden Turbinenschaufel, über den Substrathalter in das Handling, das den Substrathalter trägt und führt, stattfindet. Dieser mehr oder weniger unkontrollierbare Temperaturfluss in Kombination mit der mangelnden Ausrichtbarkeit und Bewegbarkeit des Substrats in Bezug auf den Beschichtungsstrahl führt zu massiven Einbussen in der Schichtqualität bzw. zu hohen Ausschussraten und damit zu nicht akzeptabel hohen Kosten.

Die Aufgabe der Erfindung ist es daher, einen Bauteilmanipulator zur dynamischen Positionierung eines in einem thermischen Behandlungsprozess, insbesondere in einem thermischen Spritzprozess zu behandelnden Substrats bereitzustellen, mit dem die Nachteile der aus dem Stand der Technik bekannten Substrathalter vermieden werden und mit dem es insbesondere möglich ist, das Bauteil während des Behandlungsprozesses um mindestens eine Achse zu bewegen, wobei das zu behandelnde Substrat vom Bauteilmanipulator in vorgebbarer Weise thermisch entkoppelt ist, bzw. eine thermische Kopplung und / oder Wärmefluss des zu behandelnden Substrats mit dem Bauteilmanipulator auch während des Beschichtungsvorgangs einstellbar, veränderbar bzw. beeinflussbar ist.

Eine weitere Aufgabe der Erfindung ist es, ein Beschichtungsverfahren, sowie die Verwendung eines Bauteilmanipulators bereit zu stellen, bei welchem die aus dem Stand der Technik bekannten Probleme vermieden werden, um im speziellen auch mehrere Substrate gleichzeitig optimal behandeln zu können, so dass auch auf mehreren Substrate gleichzeitig und / oder auf sehr grossen Substraten und / oder auf Substraten von sehr komplizierter Geometrie mittels eines LPPS Verfahrens, insbesondere mittels PS-PVD Oberflächenschichten von sehr hoher und gleichmässiger Qualität kosten- und zeiteffizient abgeschieden werden können.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit einen Bauteilmanipulator zur dynamischen Positionierung eines in einem thermischen Behandlungsprozess zu behandelnden Substrats, wobei der Bauteilmanipulator eine um eine Hauptdrehachse drehbare Hauptantriebsachse, ein Koppelelement und einen mit dem Koppelelement verbindbaren Substrathalter umfasst. Erfindungsgemäss ist das Koppelelement ein keramisches Koppelelement und ein Verbindungssegment des Substrathalters ist mittels einer Steck-Dreh-Verbindung zugfest und drehfest in Bezug auf eine Verbindungsachse der Steck-Dreh-Verbindung mit dem Koppelelement verbindbar und der Substrathalter ist um die Verbindungsachse rotierbar angeordnet.

Wesentlich für die Erfindung ist, dass das Koppelelement ein keramisches Koppelelement ist. Dadurch, dass das Koppelelement aus einem sehr schlecht leitenden keramischen Material ist, ist der Substrathalter und damit das darauf angeordnete zu beschichtende Subrat sehr gut vom erfindungsgemässen Bauteilmanipulator thermisch entkoppelt. Dadurch ist es erstmals möglich, zum Beispiel beim thermischen Beschichten einen Wärmefluss vom Substrat in den Bauteilmanipulator auf ein geringes vorgebbares Mass zu reduzieren, wodurch der Temperaturfluss gleichzeitig auch gleichmässiger vom zu behandelnden Substrat, also zum Beispiel einer thermisch zu beschichtenden Turbinenschaufel, über den Substrathalter in den Bauteilmanipulator abgeführt wird, so dass der aus dem Stand der Technik bekannte schädliche unkontrollierbare Temperaturfluss unterbleibt und alleine schon durch diesen Effekt die Schichtqualität massiv zu verbessern, die Ausschussraten zu reduzieren und damit zu akzeptabel Kosten zu gelangen.

Dadurch, dass durch das keramische Koppelelement der Wärmefluss vom Substrat über den Substrathalter in dem Bauteilmanipulator massiv reduziert wird, ist es auch erstmals möglich, eine Antriebs- bzw. Getriebeeinrichtung vorzusehen, mit der der Substrathalter um die Verbindungsachse rotierbar ist, ohne dass die Getriebeeinrichtung im Betriebszustand aufgrund übermässiger Wärmeeinwirkung beeinträchtigt oder gar zerstört wird. Insbesondere betrifft die Erfindung dabei einen Bauteilmanipulator mit einem 3-fach Planetengetriebe. Das ist insbesondere bei solchen speziellen Ausführungsbeispielen von grosser Bedeutung, bei welchen zur Aufnahme von mehreren Substrathaltern gleichzeitig eine Mehrzahl von Koppelelementen am Bauteilmanipulator vorgesehen ist. In diesem Fall können mittels einer am Bauteilmanipulator vorgesehenen Getriebeeinrichtung alle Koppelelemente gleichzeitig über die einzige Hauptdrehachse angetrieben und in Drehung um die Verbindungsachse versetzt werden, so dass zum Beispiel bei thermischen Beschichten mehrerer Substrate diese im Beschichtungsstrahl drehbar sind, wodurch eine besonders gleich gleichmässige Beschichtung, von bisher nicht erreichbarere Qualität herstellbar ist.

Dadurch, dass das Verbindungssegment des Substrathalters mittels einer Steck-Dreh-Verbindung zugfest und drehfest in Bezug auf eine Verbindungsachse der Steck-Dreh-Verbindung mit dem Koppelelement verbindbar ist, kann der Substrathalter sehr einfach ausgewechselt werden, ohne dass am Bauteilmanipulator aufwändige Montagearbeiten vorgenommen werden müssen. In einem besonders bevorzugten Ausführungsbeispiel ist die Steck-Dreh-Verbindung in Form eines an sich bekannten Bajonett-Verschluss Mechanismus ausgestaltet.

In einem bevorzugten Ausführungsbeispiel ist zur Aufnahme des Koppelelements mit Substrathalter eine mit der Hauptantriebsache drehfest verbundene Grundplatte vorgesehen, auf welcher eine oder mehrere Koppelelemente gleichzeitig, bevorzugt aber nicht zwingend z.B. drei Koppelelemente gleichzeitig vorgesehen werden können, so dass mehrere Substrate gleichzeitig an ein und dem selber Bauteilmanipulator vorgesehen werden können. Die Mehrzahl von Koppelelementen ist dabei besonders vorteilhaft in Bezug auf die Hauptdrehachse exzentrisch an der Grundplatte vorgesehen, so dass im Betriebszustand, zum Beispiel während eines Beschichtungsvorgangs, die auf den Substrathaltern angeordneten Substrate durch Drehung um die Hauptantriebsachse mit unterschiedlichen Bereichen des Beschichtungsstrahl in Kontakt gebracht werden können, wodurch insbesondere die Gleichmässigkeit der Beschichtung auf den Substraten deutlich verbessert werden kann.

Um zum Beispiel beim thermischen Beschichten der Substrate die Schichtqualität noch weiter zu verbessern, kann das Koppelelement zur Rotation, d.h. zum rotatorischen Antrieb des Substrathalters um die Verbindungsachse des Substrathalters über eine Antriebseinrichtung mit einem Kontaktelement in Wirkverbindung steht, wobei in einem besonders bevorzugten Ausführungsbeispiel die Hauptantriebsachse des Bauteilmanipulators in Bezug auf das Kontaktelement drehbar angeordnet ist.

In einem für die Praxis besonders wichtigen Ausführungsbeispiel ist dabei das Kontaktelement ein an einem in Bezug auf die Hauptantriebsachse feststehenden Achsenmantel angeordnetes Zahnrad, das zum Antrieb des Koppelelements mit der Antriebseinrichtung verzahnt ist.

Besonders bevorzugt ist dabei die Verbindungsachse der Steck-Dreh-Verbindung in Bezug auf die Hauptdrehachse unter einem vorgebbaren Neigungswinkel geneigt, so dass zum Beispiel einerseits eine asymmetrische Bewegung des zu beschichtenden Substrats im Beschichtungsstrahl möglich ist, so dass auch geometrisch asymmetrisch gestaltete Bauteile, die eventuell mit Hinterschnitten versehen, wie z.B. Turbinenschaufeln, auf allen Oberflächen sehr gleichmässig beschichtbar sind, insbesondere auch auf den Oberflächen schlecht zugänglicher Hinterschnitte. Ausserdem ist es möglich, wie weiter unten noch genauer erläutert werden wird, dass dadurch, dass die Substrate in Bezug zueinander geneigt sind und sich um ihre jeweilige Drehachse gleichzeitig gegeneinander drehen, nacheinander unterschiedliche Oberflächenabschnitte zweier Substrate einander zugewandte sind, und Beschichtungsmaterial von einer Substratoberfläche auf die Oberfläche eines anderen Substrats reflektiert werden kann, so dass auch Beschichtungseffekte in einer Richtung möglich sind, die nicht der Richtung des Beschichtungsstrahls entspricht.

Das Koppelelement kann dabei in einem Lagergehäuse durch ein Lagerelement gelagert sein, wobei im Lagergehäuse bevorzugt drei Lagerelemente vorgesehen sind, die ein Dreipunktlager bilden.

In einem für die Praxis besonders wichtigen Ausführungsbeispiel ist dabei zur Zuleitung eines Kühlfluids zum Substrat die Grundplatte über ein Verbindungselement mit der Hauptantriebsachse bevorzugt drehfest verbunden. In der Praxis kann das Kühlfluid zum Beispiel vom Verbindungselement über einen auf der Grundplatte angeordneten Kühlverteiler und einer Kühlleitung dem Koppelelement und dem Verbindungssegment des Substrathalters zuführbar sein. Auch das Lagerelement ist dabei durch unmittelbaren Kontakt mit dem Kühlfluid in einem für die Praxis wichtigen Ausführungsbeispiel kühlbar.

Um eine sichere Verbindung des Substrathalters bzw. des Verbindungssegments mit dem Koppelelement zu gewährleisten, kann das Verbindungssegment mittels einer Verdrehsicherung gegen ein Verdrehen in Bezug auf das Koppelelement gesichert sein, wobei die Verdrehsicherung insbesondere bevorzugt ein keramischer Sicherungsstift ist, der beispielweise mit einem am Koppelelement vorgesehenen Sicherungsband gesichert sein kann.

Das Koppelelement ist dabei zum Beispiel zum Schutz gegen Temperaturstrahlung, zum Schutz gegen einen Beschichtungsstrahl oder zum Schutz gegen andere schädliche Einflüsse, die im Betriebszustand auf das Koppelelement einwirken könnten, in einer Kapsel gekapselt.

Die Erfindung betrifft weiter ein Beschichtungsverfahren unter Verwendung eines Bauteilmanipulators, sowie die Verwendung eines Bauteilmanipulators der Erfindung, wobei das Substrat insbesondere eine Turbinenschaufel für eine Flugzeugturbine, für eine Gasturbine, für eine Dampfturbine oder für eine Wasserturbine ist.

Das erfindungsgemässe Beschichtungsverfahren betrifft dabei insbesondere, aber nicht nur, ein Beschichtungsverfahren zur Herstellung einer funktionalen strukturierten Schicht auf einem Substrat. Dabei wird in einer Prozesskammer unter einem vorgegebenen niedrigen Prozessdruck mittels eines Plasmaspritzverfahrens ein Beschichtungsmaterial in Form eines Beschichtungsstrahls auf eine Oberfläche des Substrats aufgespritzt, wobei das Beschichtungsmaterial bei dem niedrigen Prozessdruck, der kleiner als 200 mbar ist, in ein den Beschichtungsstrahl defokussierendes Plasma injiziert, wobei ein Plasma mit ausreichend hoher spezifischer Enthalpie derart erzeugt wird, dass ein substanzieller, mindestens 5 Gew-% betragender Anteil des Beschichtungsmaterials in die Dampfphase überführt wird und auf dem Substrat die strukturierte Schicht gebildet wird. Das zu beschichtende Substrat wird dabei mit dem Substrathalter derart rotierbar um eine Hauptdrehachse angeordnet, dass eine erste Oberfläche des Substrats und eine zweite Oberfläche des Substrats so zueinander ausgerichtet werden, dass zumindest ein Teil des in die Dampfphase übergegangenen Beschichtungsmaterials beim Plasmaspritzen von der ersten Oberfläche des Substrats auf die zweite Oberfläche des Substrats umgelenkt wird. Wesentlich für das Beschichtungsverfahren der vorliegenden Erfindung sind dabei unter anderem die folgenden Effekte, die durch den erfindungsgemässen Bauteilmanipulator wegen der dynamischen Positionierbarkeit des Substrats durch den Bauteilmanipulator, zum Beispiel in einem Beschichtungsstrahl, erstmals realisiert werden können:

Zum einen ist es möglich die Vorwärmtemperatur des Substrats in den vorgegebenen technisch geforderten Grenzen auch auf denjenigen Flächen im Wesentlichen aufrecht zu erhalten, die zumindest zeitweise nicht oder nicht unmittelbar dem Beschichtungsstrahl ausgesetzt sind, weil die entsprechenden Flächen zum Beispiel durch die Drehung des Substrathalters in bestimmten Fällen zumindest zeitweise oder teilweise aus dem Einflussbereich des Beschichtungsstrahls herausgedreht werden. Dieser positive Effekt der Aufrechterhaltung einer über das Substrat sehr gleichmässig verteilten Vorwärmtemperatur, wird durch die sehr gute thermische Entkopplung, die das keramische Koppelelement erstmals ermöglich, noch unterstützt und verstärkt.

Ein analoger Vorteil besteht für diejenigen Flächen, die zum Beispiel aus geometrischen Gründen nie oder nur unzureichend dem Beschichtungsstrahl unmittelbar ausgesetzt sind, weil die entsprechenden Flächen des Substrats zum Beispiel aufgrund von Hinterschnitten oder durch weitere auf dem Substrathalter angeordnete Substrate ganz oder teilweise vom Beschichtungsstrahl abgeschattet sind. Dieser aus dem Stand der Technik bekannte negative Abschattungseffekt kann zwar durch die Verwendung des erfindungsgemässen Bauteilmanipulators in den meisten Fällen erstmals weitestgehend verhindert werden. Weil nämlich das Substrat, zum Beispiel durch die geneigte Anordnung der Substrathalter und / oder das Drehen des Substrats um zwei verschiedene Drehachsen, nämlich gleichzeitig um die Hauptdrehachse und die Verbindungsachse, extrem flexibel und dynamisch im Beschichtungsstrahl positionierbar ist. Aber es versteht sich, dass bei extrem komplizierten Substratgeometrien der vorgenannte Abschattungseffekt nie ganz ausgeschlossen werden kann.

Dass auch solche Flächen immer auf der notwendigen Vorwärmtemperatur gehalten werden können wird erfindungsgemäss dadurch erreicht, dass zwei Flächen eines oder zweier Substrate auf dem Substrathalter derart zueinander angeordnet werden, dass ein Teil des Beschichtungsmaterial, das sich in der Dampfphase befindet, von einer ersten Fläche auf eine zweite Fläche umgelenkt bzw. reflektiert wird, wodurch heisser Beschichtungsdampf in ausreichender Menge auch auf diejenigen Flächen auftrifft, die für eine beträchtliche Zeitdauer nicht, oder sogar nie vom Beschichtungsstrahl beaufschlagt werden.

Unter "beträchtlicher Zeitdauer" ist dabei eine Zeitdauer zu verstehen, die so lang ist, dass das Substrat, zumindest im Bereich der nicht mit dem Beschichtungsstrahl beaufschlagten Flächen, ohne den erfindungsgemässen Reflexionseffekt so stark abkühlen würde bzw. nie die notwendige Vorwärmtemperatur erreichen würde, dass dann, wenn die entsprechende Fläche wieder mit dem Beschichtungsstrahl beaufschlagt wird, ein Beschichten, zumindest in der geforderten Qualität nicht mehr möglich wäre. Dabei ist die "beträchtliche Zeitdauer" massiv verlängert, da durch die thermische Entkopplung über das keramische Koppelelement der Wärmeabfluss bei Verwendung eines erfindungsgemässen Bauteilmanipulators extrem verlangsamt ist. Das heisst, das vorgenannte Problem ist abgesehen von dem erfindungsgemässen Reflexionseffekt allein schon durch das keramische Koppelelement deutlich entschärft.

Zum anderen können geometrisch sehr komplizierte Substrate, die zum Beispiel sehr ausgeprägte Hinterschnitte aufweisen, wodurch beispielweise Flächen entstehen, die normalerweise nicht durch den Beschichtungsstrahl erreicht werden, nicht nur ausreichend vorgewärmt sondern durch Anwendung des erfindungsgemässen Verfahrens sogar ebenfalls beschichtet werden.

An dieser Stelle ist zu bemerken, dass gerade die verschiedenen LPPS Verfahren dafür bekannt sind, dass auch abgeschattete Fläche, also Flächen die nicht direkt vom Beschichtungsstrahl beaufschlagt werden, im Prinzip beschichtet werden können. Im Gegensatz zu anderen thermischen Beschichtungsverfahren, wie zum Beispiel dem konventionellen Plasmaspritzen oder Flammspritzen, bei dem die zu beschichteten Flächen immer unmittelbar vom Beschichtungsstrahl beaufschlagt werden müssen. Die Möglichkeit des Beschichtens von abgeschatteten Oberflächenbereichen mittels LPPS ist dabei bereits in der EP 2 025 772 A1 am Beispiel eines einzelnen Turbinensegmentes erläutert, das jeweils mehrere Turbinenschaufeln umfasst und zum Beispiel eine Doppelschaufel für hoch belastete Flugzeugtriebwerke bildet.

Aber auch diese Fähigkeit der LPPS Verfahren, insbesondere des PS-PVD Verfahrens hat natürlich seine Grenzen. Vor allem dann, wenn mehrere Substrate gleichzeitig auf einem Substrathalter angeordnet werden, die zudem noch kompliziert geformt sind, wie zum Beispiel die zuvor erwähnten Doppelschaufeln für hoch belastete Flugzeugturbinen, können mit den aus dem Stand der Technik bekannten Beschichtungsverfahren nicht mehr alle Flächen der zu beschichtenden Substrate gleichmässig und in der geforderten Qualität beschichtet werden.

Durch die erfindungsgemässe Anordnung der zu beschichtenden Substrate auf dem Bauteilmanipulator werden somit mehrere wesentliche Probleme aus dem Stand der Technik gleichzeitig gelöst:
Es wird einerseits verhindert, dass sich die Substrate oder Teile der Substrate unzulässig weit abkühlen, wenn sie zum Beispiel durch Drehung des Substrathalters dauernd oder zumindest zeitweise der direkten Beaufschlagung durch den Beschichtungsstrahl entzogen werden.

Zweitens können Oberflächenbereiche des Substrats, die ohne Anwendung des erfindungsgemässen Verfahrens nicht genügend vorgewärmt werden könnten, problemlos auf die notwendige Vorwärmtemperatur gebracht werden, selbst dann wenn sie während des gesamten Beschichtungsvorgangs nie dem Beschichtungsstrahl ausgesetzt sind. Dazu ist übrigens keinerlei zusätzliche Heizung notwendig, wie zum Beispiel beim EP-PVD Verfahren, bei welchem in der Kammerwand der Beschichtungskammer zwingend eine zusätzliche Heizung vorgesehen werden muss.

Und drittens ist es durch Anwendung des erfindungsgemässen Verfahrens erstmals möglich, die vorgenannten Oberflächen und damit die gesamte zu beschichtende Oberfläche der zu beschichtenden Substrate gleichmässig und in der gewünschten hohen Qualität zu beschichten. Darüber hinaus ist es mit dem Verfahren der vorliegenden Erfindung erstmals möglich, eine Mehrzahl von Substraten gleichzeitig, insbesondere auch in geringem Abstand zueinander auf ein und demselben Substrathalter anzuordnen und in einem Arbeitsgang zu beschichten. Damit erweist sich das Beschichtungsverfahren der vorliegenden Erfindung als enorm effizient im Vergleich zu den aus dem Stand der Technik bekannten Verfahren, bei welchen jeweils immer nur ein einziges kompliziertes Substrat gleichzeitig in einem Arbeitsgang beschichtet werden kann.

Dabei muss hervorgehoben werden, dass der erfindungsgemässe Effekt weder mit dem klassischen PVD Verfahren noch mit einem klassischen thermischen Spritzverfahren noch mit dem wohlbekannten EP-PVD Verfahren zu erzielen ist und in sofern völlig unerwartet und überraschend war. Somit konnte keines der vorgenannten bekannten Verfahren zur Lösung der erfindungsgemässen Aufgabe beitragen oder auch nur einen Hinweis darauf geben. Es ist nämlich eine Erkenntnis der vorliegenden Erfindung, dass im wesentlichen zwei spezifische Eigenschaften des LPPS Verfahrens im Allgemeinen und des PS-PVD Verfahrens im Besonderen notwendig sind, dass das erfindungsgemässe Verfahren überhaupt erfolgreich zum Beschichten von kompliziert geformten Substraten oder von mehreren Substraten gleichzeitig eingesetzt werden kann.

Im Gegensatz zum erfindungsgemässen Verfahren ist sowohl beim klassischen PVD Verfahren wie auch beim EB-PVD Prozess der Transport des verdampften Materials in Richtung zur Substratoberfläche ein Diffusionsprozess, also ein Prozess der nicht gerichtet ist oder wenn überhaupt nur schwach gerichteten Charakter hat. Somit sind auch Reflexionsprozesse, die eventuell, wenn überhaupt, an den Oberflächen der zu beschichtenden Substrate auftreten im Wesentlichen ungerichtet, haben also eine mehr oder weniger diffuse Charakteristik. Es liegt auf der Hand, dass so keine gezielte und ausreichende Erwärmung bzw. Beschichtung von abgeschatteten Teilen der Substratoberfläche möglich ist. Es ist zwar vom klassischen PVD bzw. vom EB-PVD Prozess bekannt, einen drehbaren Substratteller zu benützen, der mit mehreren Substraten gleichzeitig bestückt ist. Das dient jedoch nicht dazu gezielt eine Reflexion eines gerichteten Beschichtungsstrahls einzustellen, wie beim erfindungsgemässen Verfahren, sondern dient lediglich dazu gewisse Inhomogenitäten der diffusen Verteilung des Dampfes des Beschichtungsmaterials in der Prozesskammer auszugleichen.

Beim klassischen thermischen Beschichten, wie zum Beispiel beim klassischen Plasmabeschichten unter verhältnismässig hohem Prozessdruck, wie z.B. beim Plasmaspritzen unter Atmosphärendruck oder beim Flammspritzen wird zwar ein gerichteter Beschichtungsstrahl verwendet und es ist auch bekannt einen drehbaren Substrathalter zu verwenden, der mit mehreren Substraten gleichzeitig bestückt ist. Aber auch hier ist der erfindungsgemässe Effekt grundsätzlich nicht möglich. Bei den vorgenannten thermischen Spritzprozessen trifft nämlich das Beschichtungsmaterial praktisch im mehr oder weniger geschmolzenen, also im mehr oder weniger flüssigen Zustand auf die Substratoberfläche und trifft nicht wie beim erfindungsgemässen Verfahren in der Dampfphase auf die Substratoberfläche. Das ist gerade die charakteristische Eigenschaft dieser bekannten Beschichtungsprozesse. Wie bereits eingangs erwähnt werden bei diesen bekannten Verfahren die Schichten durch sogenannte flüssige "Splats", die beim Auftreffen auf dem Substrat aus der Schmelze erstarren, aufgebaut und nicht durch Abscheiden von dampfförmigen Material. Es versteht sich, dass wenn im Wesentlichen flüssiges Material auf die Oberfläche des zu beschichtenden Substrats auftrifft, praktisch keine Reflexion der Flüssigkeitströpfchen stattfinden kann. Diese kondensieren nämlich beim Auftreffen auf die relativ kühle Oberfläche des Substrats sofort zu festen "Splats" und kleben an der Oberfläche fest, so dass eine Reflexion praktisch ausgeschlossen ist.

In der Praxis wird vorteilhaft mindestens ein erstes Substrat umfassend die erste Oberfläche und mindestens ein zweites Substrat umfassend die zweite Oberfläche derart auf dem Substratteller angeordnet und zueinander ausgerichtet, dass zumindest ein Teil des in die Dampfphase übergegangenen Beschichtungsmaterials beim Plasmaspritzen von der ersten Oberfläche des ersten Substrats auf die zweite Oberfläche des zweiten Substrats umgelenkt bzw. reflektiert wird, so dass die zweite Oberfläche des Substrats durch das von der ersten Oberfläche des ersten Substrats umgelenkten bzw. reflektierten Beschichtungsmaterial beschichtet und / oder vorgewärmt wird.

Bevorzugt wird dabei eine Menge an dampfförmigen Beschichtungsmaterial, das von der ersten Oberfläche auf die zweite Oberfläche umgelenkt bzw. reflektiert wird, derart eingestellt, dass die zweite Oberfläche auf einer vorgegebenen Oberflächentemperatur gehalten wird, wenn die zweite Oberfläche nicht unmittelbar vom Beschichtungsstrahl beaufschlagt wird. Es sind dabei mehrere Massnahmen möglich, mit denen die Menge an umgelenktem bzw. reflektiertem Beschichtungsmaterial geeignet eingestellt werden kann. So kann zum Beispiel die Orientierung der ersten Oberfläche in Bezug auf die zweite Oberfläche entsprechend optimiert werden. Oder verschiedene Spritzparameter, wie die Heizleistung für das Plasma, der Prozessdruck in der Prozesskammer, die Überschallgeschwindigkeit des Beschichtungsstrahl oder andere Spritzparameter können entsprechend eingestellt werden.

Auch kann der rotierbare Substratteller während des Beschichtungsvorgangs um die Hauptdrehachse und / oder um die Verbindungsachse mit einer vorgegebenen festen oder variablen Drehgeschwindigkeit gedreht werden und / oder dessen Drehgeschwindigkeit so eingestellt oder eingeregelt werden, dass die Menge an umgelenktem bzw. reflektiertem Beschichtungsmaterial oder ein anderer Beschichtungsparameter optimiert wird.

Bevorzugt wird zu den vorgenannten oder zu anderen Zwecken, zum Beispiel um die Substrate gleichmässig auf eine vorgegebene Temperatur zu temperieren, der Beschichtungsstrahl während des Beschichtungsvorgangs in einem vorgegebenen Raumwinkelbereich in an sich bekannter Weise über das zu beschichtende Substrat hin- und hergeschwenkt werden, was auch als "sweepen" bekannt ist und bereits eingangs ausführlich erklärt wurde.

Auch kann ein Abstand zwischen dem Bauteilmanipulator und einer das Plasma erzeugende Plasmaquelle in einem vorgegebenen Wegintervall verändert werden. Das kann zum Beispiel dadurch geschehen, das die Position der Plasmaquelle und / oder die Position des Bauteilmanipulators derart verändert wird, dass sich der gegenseitige Abstand zwischen Bauteilmanipulator und Plasmaquelle bzw. der die Plasmaquelle enthaltende Spritzpistole ändert.

Selbstverständlich ist es auch möglich, dass der Bauteilmanipulator als ganzes in Bezug auf den Beschichtungsstrahl in einem vorgegebenen Schwenkbereich verschwenkt wird.

Der Prozessdruck in der Beschichtungskammer wird dabei in der Praxis häufig kleiner als 20 mbar, bevorzugt kleiner als 10 mbar, im speziellen zwischen 0.1 und 2 mbar gewählt.

In der Regel wird der Beschichtungsstrahl dabei bei Überschallgeschwindigkeit mit einer Schallgeschwindigkeit zwischen 1.500 m/s und 3.000 m/s, bevorzugt bei ca. 2000 m/s betrieben und / oder der Beschichtungsstrahl hat eine Temperatur zwischen 4.000 K und 20.000 K, bevorzugt eine Temperatur zwischen 6.000 K und 10.000 K.

Für die meisten in der Praxis relevanten Fälle wird das Beschichtungsmaterial dabei in an sich bekannter Weise in Form eines Spritzpulver bereit gestellt.

Dabei werden in einem bevorzugten Ausführungsbeispiel die Prozessparameter bzw. die oben beschriebenen geometrischen Parameter der Beschichtungsapparatur so eingestellt, dass mehr als 10 Gew.-% Anteil des Beschichtungsmaterials in die Dampfphase überführt wird, bevorzugt mehr als 50 Gew.-%, im speziellen mehr als 80 Gew.-% in die Dampfphase überführt werden.

Das erfindungsgemässe Verfahren eignet sich dabei besonders gut dazu, eine Mehrzahl von Turbinenschaufeln, insbesondere eine Mehrzahl von Doppelschaufeln in einem Beschichtungsvorgang gleichzeitig zu beschichten, wobei die strukturierte Schicht in der Praxis häufig eine an sich bekannte Wärmedämmschicht ist.

Die Erfindung betrifft darüber hinaus eine Beschichtungsvorrichtung zur Durchführung eines oben beschriebenen erfindungsgemässen Verfahrens zum Herstellen einer funktionalen strukturierten Schicht auf einem Substrat. Die erfindungsgemässe Beschichtungsvorrichtung umfasst dabei eine Prozesskammer in der unter einem vorgebbaren niedrigen Prozessdruck mittels eines Plasmaspritzverfahrens ein Beschichtungsmaterial in Form eines Beschichtungsstrahls auf eine Oberfläche des Substrats aufspritzbar ist, wobei das Beschichtungsmaterial bei dem niedrigen Prozessdruck, der kleiner als 200 mbar ist, in ein den Beschichtungsstrahl defokussierendes Plasma injizierbar und dort teilweise oder vollständig aufschmelzbar ist. Dabei ist eine Plasmaquelle bzw. eine eine Plasmaquelle enthaltende Spritzpistole vorgesehen, mit welcher ein Plasma mit ausreichend hoher spezifischer Enthalpie erzeugbar ist, so dass ein substanzieller, mindestens 5 Gew-% betragender Anteil des Beschichtungsmaterials in die Dampfphase überführbar und auf dem Substrat die strukturierte Schicht bildbar ist. Erfindungsgemäss ist zur dynamischen Positionierung eines in einem thermischen Behandlungsprozess zu behandelnden Substrats ein Bauteilmanipulator gemäss der vorliegenden Erfindung vorgesehen.

Die erfindungsgemässe Beschichtungsvorrichtung ist dabei bevorzugt derart mit dem Bauteilmanipulator ausgestattet, dass das zu beschichtendes Substrat auf dem Bauteilmanipulator so angeordnet werden kann, dass eine erste Oberfläche des Substrats und eine zweite Oberfläche des Substrats so zueinander auf dem Substratteller ausrichtbar sind, dass während eines Beschichtungsvorgangs zumindest ein Teil des in die Dampfphase übergegangenen Beschichtungsmaterials beim Plasmaspritzen von der ersten Oberfläche des Substrats auf die zweite Oberfläche des Substrats umgelenkt bzw. reflektiert wird.

Es versteht sich von selbst, dass in speziellen Ausführungsbeispielen die erfindungsgemässe Beschichtungsvorrichtung bzw. der erfindungsgemässe Bauteilmanipulator baulich entsprechend so ausgestaltet sein können, dass auch andere Verfahrensvarianten, wie zum Beispiel oben beschrieben, ebenfalls ausgeführt werden können.

Im Folgenden wird die Erfindung an Hand der Zeichnung näher erläutert. Es zeigen:
- Fig. 1: Ein aus dem Stand der Technik bekanntes Verfahren zur Beschichtung einer Turbinenschaufel eines Flugzeugtriebwerks;
- Fig. 2a: ein erstes sehr einfaches Ausführungsbeispiel eines erfindungsgemässen Bauteilmanipulators;
- Fig. 2b: das Ausführungsbeispiel gemäss Fig. 2a im demontierten Zustand;
- Fig. 3: ein besonders bevorzugtes Ausführungsbeispiel eines erfindungsgemässen Bauteilmanipulators;
- Fig. 4a: das Ausführungsbeispiel der Fig. 3 ohne Kapselung;
- Fig. 4b: eine Ansicht auf das Ausführungsbeispiel der Fig. 4a aus Richtung I gemäss Fig. 4a;
- Fig. 4c: Fig. 4a bzw. Fig. 4b in einer perspektivischen Ansicht ohne Grundplatte;
- Fig. 4d: Grundplatte mit Antriebseinrichtung gemäss Fig. 4a bzw. Fig. 4b;
- Fig. 4e: Achsenmantel mit Hauptantriebsachse;
- Fig. 5a: Aufbau eines Lagergehäuses mit Koppelelement in perspektivischer Ansicht;
- Fig. 5b: Lagergehäuse gemäss Fig. 5a ohne Koppelelement ;
- Fig. 5c: ein keramisches Koppelelement,
- Fig. 6a: Herstellung der Steck-Dreh-Verbindung zwischen Substrathalter und Koppelelement.
- Fig. 6b: Steck-Drehverbindung zwischen Substrathalter und Koppelelement;
- Fig. 6c: Verdrehsicherung der Steck-Dreh-Verbindung mittels Sicherungsstift;
- Fig. 6d: Verdrehsicherung der Steck-Dreh-Verbindung in teilweise transparenter Darstellung des Koppelelements;
- Fig. 7: ein erfindungsgemässes Verfahren zur gleichzeitigen Beschichtung mehrerer Turbinenschaufeln:
- Fig. 8: eine Ansicht des Ausführungsbeispiels der Fig. 7 aus Blickrichtung B.

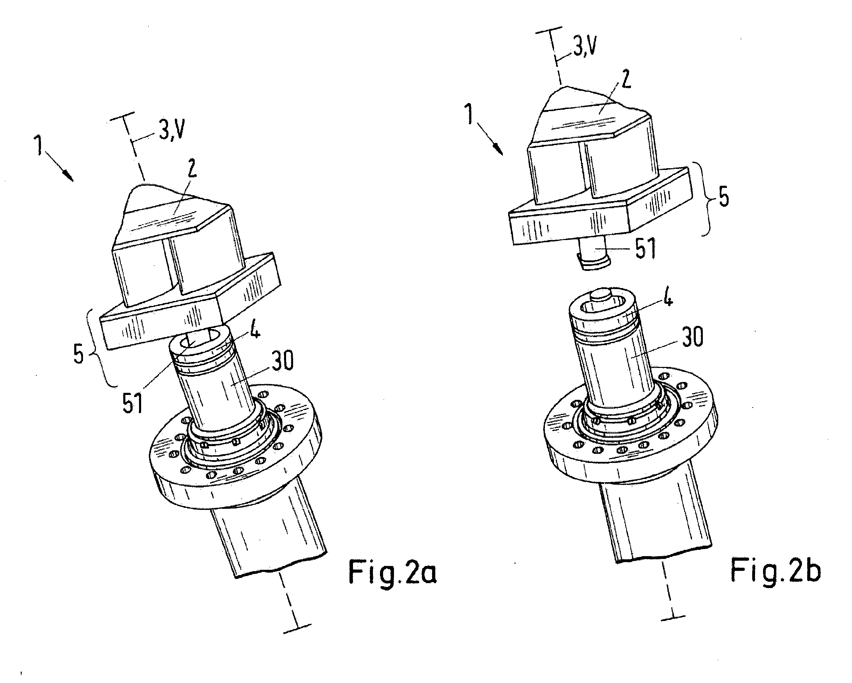

Fig. 1 wurde bereits eingangs bei der Diskussion des Standes der Technik beschrieben, so dass hier die Diskussion direkt mit erfindungsgemässen Ausführungsbeispielen gemäss Fig. 2 bis Fig. 8 fortgesetzt werden kann.

Anhand der Fig. 2a und Fig. 2b wird zunächst ein erstes sehr einfaches Ausführungsbeispiel eines erfindungsgemässen Bauteilmanipulators vorgestellt, der im Folgenden gesamthaft mit dem Bezugszeichen 1 bezeichnet wird. Zur Verdeutlichung der Funktion der Steck-Drehverbindung ist in Fig. 2b das Ausführungsbeispiel gemäss Fig. 2a im demontierten Zustand dargestellt, dass heisst, in Fig. 2b ist die Steck-Dreh-Verbindung zwischen Substrathalter 5 und Koppelelement 4 gelöst; das Verbindungselement 51 ist aus der dem Koppelelement 4 herausgezogen.

Das einfache Ausführungsbeispiel eines erfindungsgemässen Bauteilmanipulator 1 gemäss Fig. 2a und Fig. 2b gestattet nur die Aufnahme eines einzigen Substrathalters 5 mit Substrat 2 zur dynamischen Positionierung des in einem thermischen Behandlungsprozess zu behandelnden Substrats 2. Der Bauteilmanipulator umfasst in diesem sehr einfachen Ausführungsbeispiel als wesentliche Elemente eine um eine Hauptdrehachse 3 drehbare Hauptantriebsachse 30, ein keramisches Koppelelement 4 und einen mit dem Koppelelement 4 verbindbaren Substrathalter 5. Gemäss der vorliegenden Erfindung ist das keramische Koppelelement 4 mit dem Verbindungssegment 51 des Substrathalters 5 mittels einer Steck-Dreh-Verbindung zugfest und drehfest in Bezug auf eine Verbindungsachse V der Steck-Dreh-Verbindung derart verbunden, dass der Substrathalter 5 um die Verbindungsachse V rotierbar angeordnet ist.

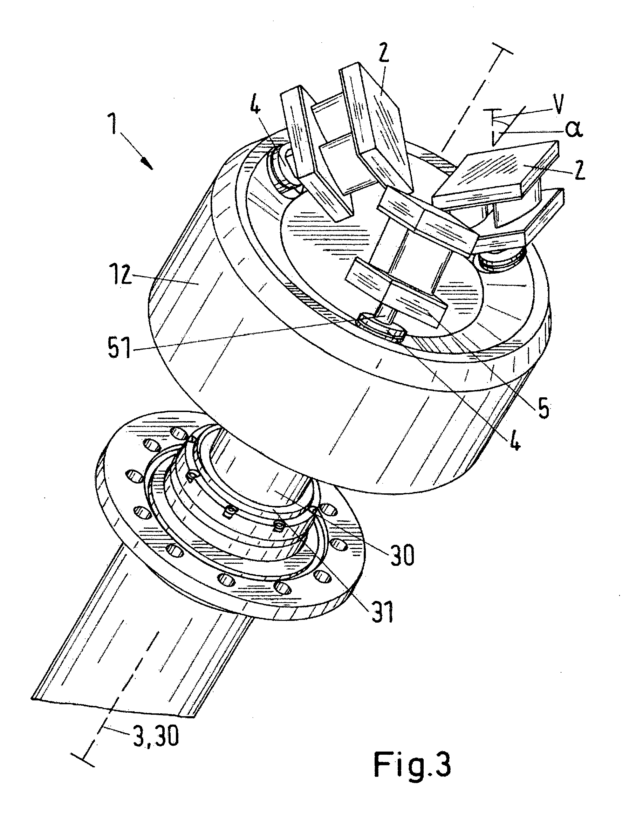

Anhand der Fig. 3 bis Fig. 6d wird nunmehr ein für die Praxis besonders wichtiges Ausführungsbeispiel eines erfindungsgemässen Bauteilmanipulators vorgestellt.

Der erfindungsgemässe Bauteilmanipulator 1 gemäss Fig. 3 zur dynamischen Positionierung eines in einem thermischen Behandlungsprozess zu behandelnden Substrats 2, hier eine Doppel-Turbinenschaufel 2, umfasst eine um eine Hauptdrehachse 3 drehbare Hauptantriebsachse 30, ein Koppelelement 4 und einen mit dem Koppelelement 4 verbundenen Substrathalter 5. Erfindungsgemäss ist dabei das Koppelelement 4 ein keramisches Koppelelement 4, wobei ein Verbindungssegment 51 des Substrathalter 5 mittels einer Steck-Dreh-Verbindung zugfest und drehfest in Bezug auf eine Verbindungsachse V der Steck-Dreh-Verbindung mit dem Koppelelement 4 verbunden ist. Jede Verbindungsachse V der Steck-Dreh-Verbindung ist dabei in Bezug auf die Hauptdrehachse 3 unter einem vorgebbaren Neigungswinkel α geneigt, wobei der Neigungswinkel α in der Praxis meist grösser oder kleiner als 90° ist, und in einem bevorzugten Ausführungsbeispiel ca. 30° beträgt. Bevorzugt ist dabei jeder einzelne Substrathalter 5 um seine Verbindungsachse V im Betriebszustand rotierbar und alle Substrathalter 5 sind gemeinsam um die Hauptdrehachse 3 über die Hauptantriebsachse 30 rotierbar.

Wie deutlich zu sehen ist, sind zur Aufnahme einer Mehrzahl von Substrathaltern 5 eine Mehrzahl von Koppelelementen 4 in Bezug auf die Hauptdrehachse 3 exzentrisch an der Grundplatte 6 vorgesehen.

Wie anhand der folgenden Detailzeichnungen noch genauer erläutert werden wird, ist das Koppelelement 4 zum Beispiel zum Schutz gegen Temperaturstrahlung, zum Schutz gegen einen hier nicht dargestellten Beschichtungsstrahl BS oder zum Schutz gegen andere schädliche Einflüsse, die im Betriebszustand auf das Koppelelement 4 einwirken könnten, in einer Kapsel 12 gekapselt.

Die Kapsel 12 beherbergt dabei als wesentliche Elemente zur Aufnahme des Koppelelements 4 mit Substrathalter 5, eine mit der Hauptantriebsache 30 drehfest verbundene Grundplatte 6, die durch die Kapsel 12 in Fig. 2 verdeckt ist und daher nicht zu sehen ist.

Ebenfalls von der Kapsel 12 verdeckt und daher in Fig. 3 nicht zusehen, ist zur Zuleitung eines Kühlfluids KF die Grundplatte 6 über ein Verbindungselement 32 mit der Hauptantriebsachse 3 drehfest verbunden, und die Koppelelemente 4 stehen zur Rotation des Substrathalters 5 über eine ebenfalls in der Kapsel 12 befindliche Antriebseinrichtung 7 mit einem Kontaktelement 8 in Wirkverbindung, d.h. insbesondere ist die Hauptantriebsachse 30 in Bezug auf das Kontaktelement 8 drehbar angeordnet, wobei das Kontaktelement 8 besonders bevorzugt ein an einem in Bezug auf die Hauptantriebsachse 30 feststehenden Achsenmantel 31 angeordnetes Zahnrad ist, das zum Antrieb des Koppelelements 4 mit der Antriebseinrichtung 7 verzahnt ist.

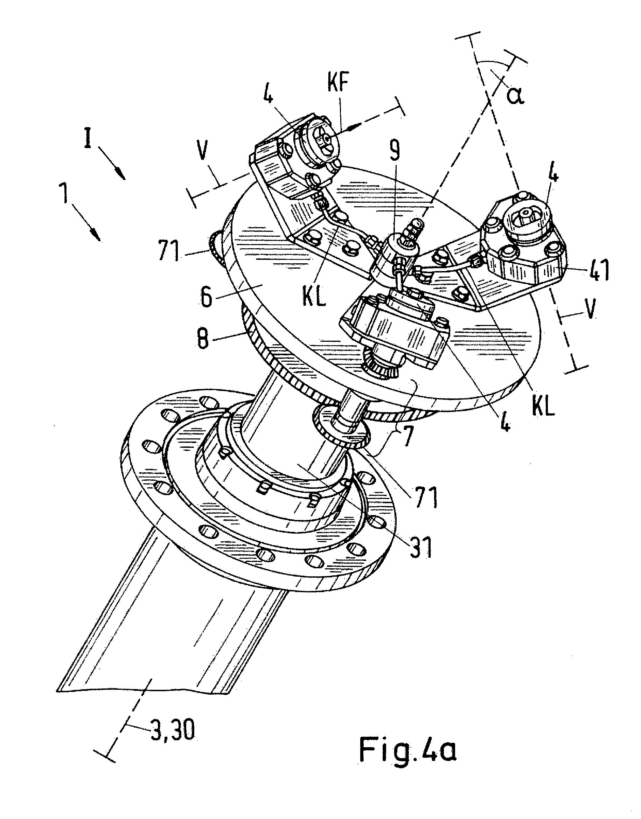

Anhand der folgenden Fig. 4a bis Fig. 4e werden die Komponenten des Ausführungsbeispiels eines erfindungsgemässen Bauteilmanipulators 1 gemäss Fig. 3 und Fig. 2, soweit bei dem Ausführungsbeispiel in Fig. 2 vorhanden, näher im Detail beschrieben.

Anhand der Fig. 4a ist das Ausführungsbeispiel der Fig. 3 ohne Kapselung, das heisst bei entfernter Kapsel 12, dargestellt, so dass die Komponenten im Inneren der Kapsel 12, sowie deren Zusammenwirken besser erkennbar ist. Ebenfalls sind aus Gründen der Übersichtlichkeit die Substrathalter 5 mit Substraten 2 entfernt.

Deutlich zu erkennen ist zunächst wieder die um die Hauptdrehachse 3 drehbare Hauptantriebsachse 30, die durch ein in Bezug auf die Hauptantriebsachse 30 nicht drehbaren, also feststehenden Achsenmantel 31 geführt ist. Die Hauptantriebsachse 30 wird dabei von einem nicht dargestellten Antrieb, zum Beispiel von einem geeigneten Elektromotor oder einem hydraulisch oder pneumatischen Motor oder einem anderen geeigneten Antrieb, im Betriebszustand in Rotation versetzt.

Am Achsenmantel 31, in dem wie erwähnt die Hauptantriebsachse 30 geführt ist, ist Kontaktelement 8 angeordnet und mit dem Achsenmantel drehfest verbunden. Das Kontaktelement 8 ist hier also ein an dem in Bezug auf die Hauptantriebsachse 30 feststehenden Achsenmantel 31 angeordnetes Zahnrad, das zum Antrieb der drei Koppelelemente 4 mit der Antriebseinrichtung 7 verzahnt ist.

Die drei Koppelelemente 4, die jeweils in einem Lagergehäuse 41 angeordnet sind, sind auf der Grundplatte 6 vorgesehen.

Die Grundplatte 6 ist über ein in Fig. 4a nicht sichtbares Verbindungselement 32 mit der Hauptantriebsachse 30 drehfest verbunden, so dass die Grundplatte 6 von der Hauptantriebsachse 30 in Rotation um die Hauptdrehachse 3 versetzt werden kann.

Da die Koppelemente 4 jeweils über die Antriebseinrichtung 7, die ihrerseits jeweils mit einem Zahnrad 71 mit dem als feststehendes Zahnrad ausgestaltetem Kontaktelement 8 in drehfestem Eingriff stehen, an das Kontaktelement 8 gekoppelt sind, werden die keramischen Koppelelemente 4 bei Rotation der Grundplatte 6 in Bezug auf das feststehende Kontaktelement 8 ebenfalls in Rotation versetzt. Diese Art des Antriebs, der im Prinzip ein sehr einfaches Getriebe darstellt, ist dem Fachmann an sich aus anderen Anwendungen bekannt und die Funktion des Drehantriebs des Koppelelements 4 ist damit für den Fachmann aus der Fig. 4a unmittelbar und ohne weiteres verständlich.

Ebenfalls zu erkennen ist der auf der Grundplatte 6 angeordnete Kühlverteiler 9, der über separate Kühlleitungen KL jeweils über Anschlüsse an den Lagergehäusen 41 mit den Koppelementen 4 leitungsverbunden sind.

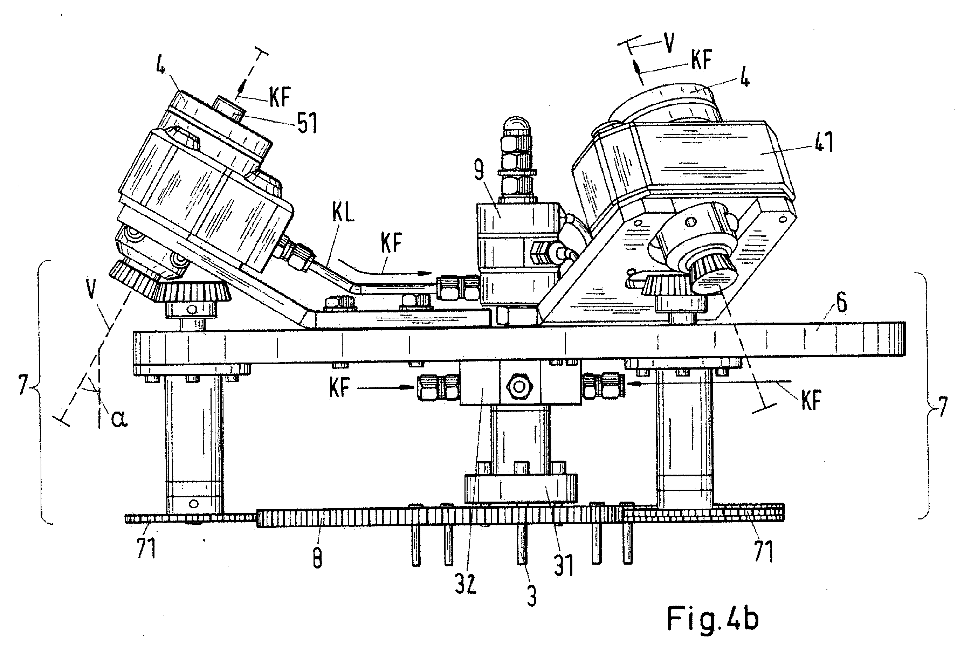

Wie später noch genauer erläutert werden wird, wird der Kühlverteiler 9 zum Beispiel zentral über die Hauptantriebsache 30, oder wie in Fig. 4b dargestellt, über Zuführöffnungen am Verbindungselement 32 mit einem Kühlfluid KF gespeist, das dann über die Kühlleitungen KL zur Kühlung der Substrathalter 5 bzw. der Substrate 2 an die Koppelelemente 4 weitergeführt wird. Als Kühlfluid KF kommt dabei jedes geeignete Kühlfluid, insbesondere ein Gas, wie Stickstoff oder ein Edelgas oder jedes andere für den entsprechenden Bearbeitungsprozess geeignete gasförmige oder flüssige Kühlfluid KF in Frage.

Dabei ist es durchaus auch möglich, dass die Grundplatte 6 entweder mittels des Kühlfluids KF ebenfalls gekühlt wird oder aber für die Kühlung der Grundplatte 6 zusätzliche Einrichtungen geschaffen werden, die die Grundplatte 6 mit einem weiteren Kühlfluid, z.B. mit Wasser oder einem geeigneten Gas kühlt.

Fig. 4b zeigt zur Verdeutlichung nochmals das Ausführungsbeispiel der Fig. 4a diesmal in einer Ansicht aus Richtung I gemäss Fig. 4a. In dieser Seitenansicht ist jetzt auch das Verbindungselement 32 deutlich zu sehen, über das das Kühlfluid über seitliche Zuführöffnungen eingespeist und dem Kühlverteiler 9 zugeführt wird.

Hier ist auch nochmals die Funktionsweise des Antriebsmechanismus sehr deutlich zu sehen. Das als Zahnrad ausgebildete Kontaktelement 8 ist drehfest mit Schrauben mit dem feststehenden Achsenmantel 31 verschraubt. Das Verbindungselement 32 ist ebenfalls mit dem feststehenden Achsenmantel 31 bzw. mit dem feststehenden Kontaktelement 8 verschraubt, so dass auch das Verbindungselement 32 in Bezug auf die Hauptantriebsachse 30 bzw. in Bezug auf die Grundplatte 6 ebenfalls feststehend ist. Der Kühlverteiler 9 ist dabei mit der rotierbaren Grundplatte 6 drehfest verbunden und rotiert mit dieser im Betriebszustand mit. Das Kühlfluid KF wird dabei über eine zentrale Leitung, über die der Kühlverteiler 9 und das Verbindungselement 32 leitend aber nicht drehfest verbunden sind, vom feststehenden Verbindungselement dem rotierenden Kühlverteiler zugeführt.

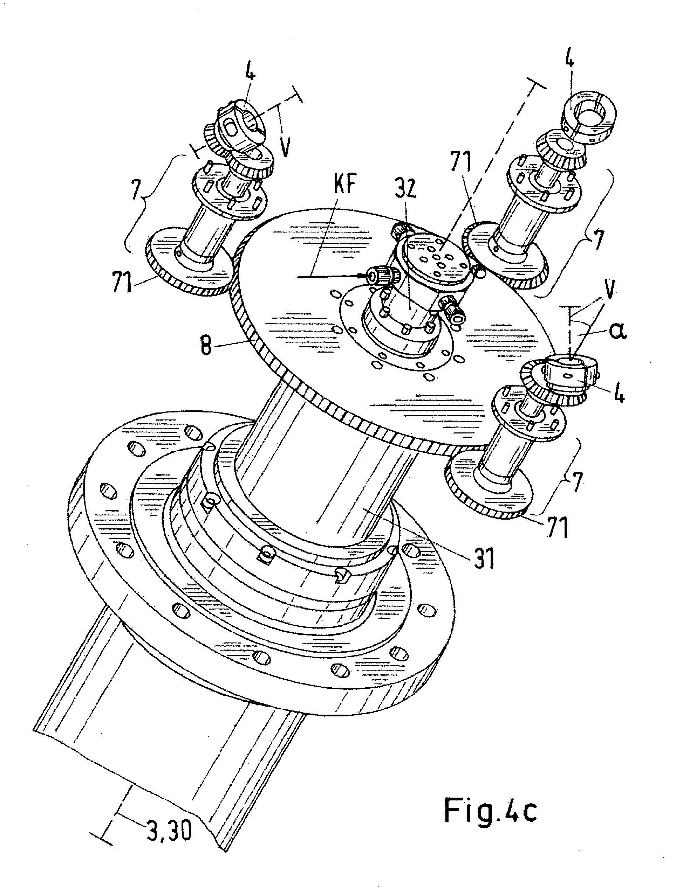

In Fig. 4c ist zum besseren Verständnis des zuvor beschriebenen Antriebsmechanismus zum Antrieb der Koppelelemente 4 über die Zahnräder 71, die Fig. 4a bzw. Fig. 4b nochmals in einer perspektivischen Ansicht ohne Grundplatte 6 dargestellt.

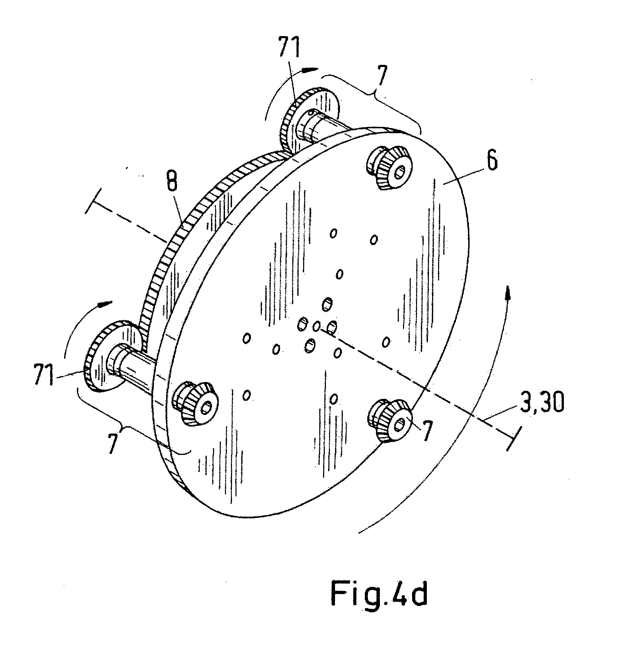

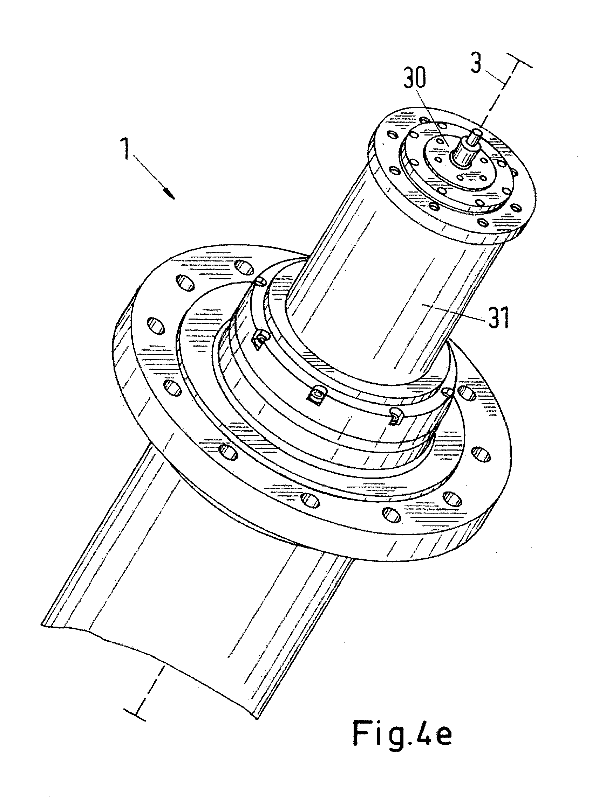

Die Fig. 4d und Fig. 4e zeigen schliesslich die Grundplatte 6 mit Antriebseinrichtung 7 bzw. den feststehenden Achsenmantel 31 mit Hauptantriebsachse 30 gemäss Fig. 4a bzw. Fig. 4b nochmals jeweils separat im Detail.

Wie der Fig. 4d zu entnehmen ist, ist die Grundplatte 6 um die Hauptdrehachse 3 drehbar angeordnet, wobei die Zahnräder 71 der Antriebseinrichtung 7 mit dem zahnradförmigen Kontaktelement 8 in Eingriff stehen, so dass eine Rotation der Grundplatte 6 um die Hauptdrehachse 3 die nicht dargestellten Koppelelemente 4 in Rotation um die Verbindungsachse V versetzen.

Der Fig. 4e ist deutlich Aufbau und Funktion der Hauptantriebsachse 30 zu entnehmen, die innerhalb des feststehenden Achsenmantels 31 drehbar um die Hauptdrehachse 3 angeordnet ist.

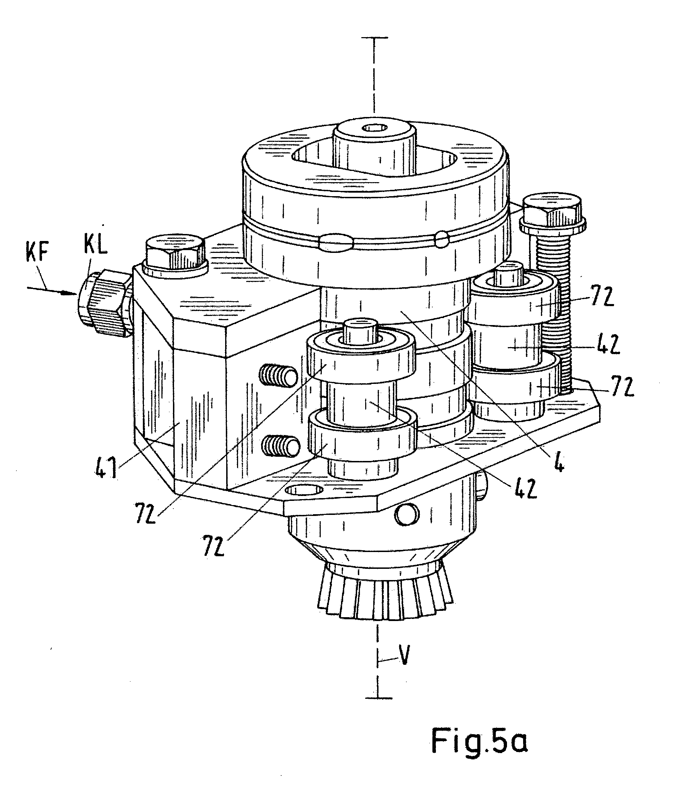

Anhand der Fig. 5a ist der Aufbau eines Lagergehäuses mit Koppelelement in perspektivischer Ansicht mit teilweise aufgeschnittenem Gehäuse schematisch dargestellt.

Wie deutlich zu sehen ist, ist das Koppelelement 4 im Lagergehäuse 41 durch Lagerelemente 42 gelagert, wobei im Lagergehäuse 41 drei Lagerelemente 42 vorgesehen sind, die ein Dreipunktlager bilden. Zu sehen sind nur zwei Lagerelemente im aufgeschnittenen Bereich des Lagergehäuses 41. Das dritte Lagerelement ist in Fig. 5a nicht zusehen, weil es sich unter dem Teil des Lagergehäuses 41 befindet, der nicht aufgeschnitten ist. Die Lagerung des Koppelelements 4 über drei mal zwei Lagerrollen 72 hat den enormen Vorteil, dass das Spiel zwischen dem Koppelelement 4 und den Lagerrollen 72 gut definierbar ist. Ausserdem sind so verhältnismässig kleine Berührungsflächen zwischen Koppelelement 4 und Lagerollen 72 definiert, so dass verhältnismässig wenig Wärme übertragen wird und überdies die Lager klein gehalten werden können, was wiederum Kosten spart. Die Lagerelemente 42 sind dabei für Einsatzbereiche bis ca. 500°C aus einer Kombination aus CrNi mit einer Keramik gefertigt. Für Temperaturen bis ca. 800°C kann z.B. eine Si₃N₄ Keramik vorteilhaft für die Lagerelemente 42 verwendet werden. Prinzipiell kommt auch Al2O3 als Material für die Lager in Frage, wobei dann sogar Temperaturen bis zu 1900°C möglich sind. Notwendige Dichtungen, z.B. am Lager oder das weiter unten noch beschriebene Sicherungsband 11 können bevorzugt aus einem Nadelfliess, z.B. einem Nadelfliess 3.5 mm hergestellt sein, was Betriebstemperaturen bis 1100°C problemlos ermöglicht.

Die Lagerelemente 42 werden dabei über die Kühlleitungen KL in unmittelbaren Kontakt mit dem Kühlfluid KF gebracht und können so mit dem Kühlfluid KF gekühlt werden.

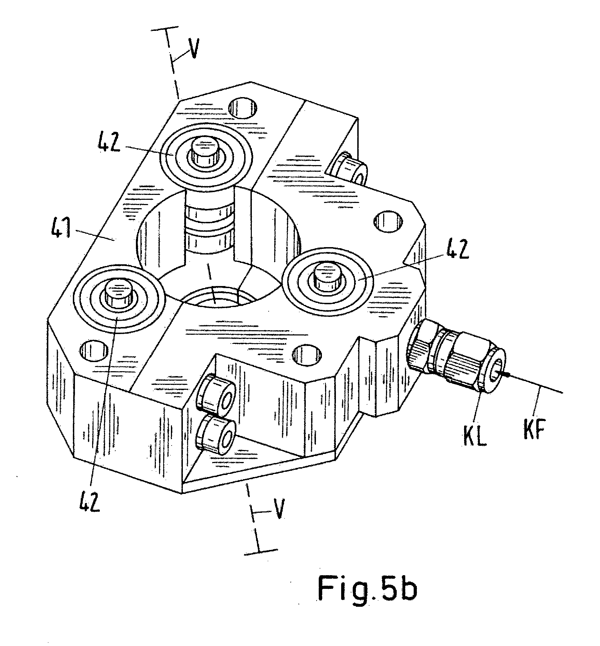

Zum bessren Verständnis zeigt Fig. 5b das Lagergehäuse 41 gemäss Fig. 5a ohne Koppelelement 4. Deutlich zusehen sind die drei Lagerelemente 42, die ein Dreipunktlager für das Koppelelement 4 bilden. Das Lagergehäuse 41 kann dabei zum Beispiel zum Schutz gegen Wärmeeinwirkung mit einem Nadelvliess verkleidet sein, das auch hohe Betriebstemperaturen bis z.B. 1100 °C zulässt.

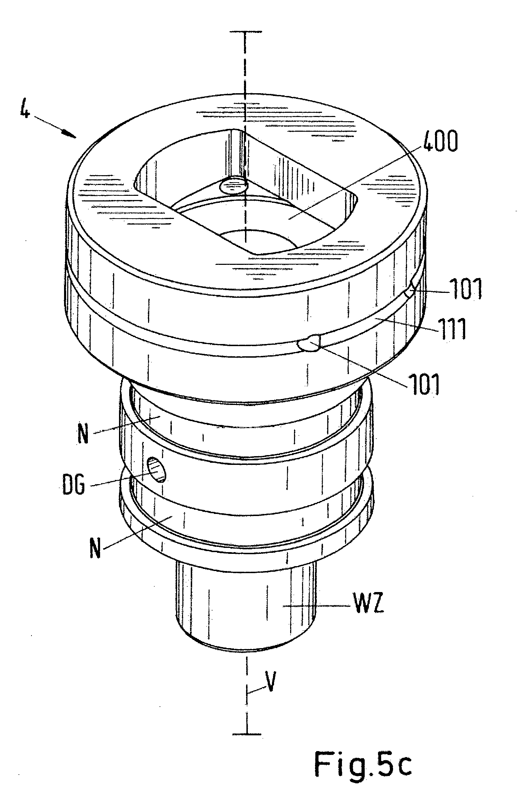

Die Fig. 5c zeigt ein Koppelelement 4 zum Einsatz in das Lagergehäuse 41 gem. Deutlich zu erkennen sind die Aufnahmenuten N für die Aufnahme der Lagerrollen 72. Ebenfalls gut zu Erkennen ist die Durchgangsöffnung DG durch das Kühlfluid KF in das Innere des Koppelelements 4 geleitet werden kann. Der darstellungsgemäss untere Bereich WZ des Koppelelements dient zur Aufnahme eines Zahnrads, das bevorzugt aus Metall ist und das die Kopplung an die Antriebseinrichtung 7 bewerkstelligt. Das Koppelelement ist dabei zum Beispiel aus Al₂O₂, SiO₂ oder einer anderen geeigneten technischen Keramik gefertigt. Fig. 5c. Deutlich zu erkennen ist die mehr oder weniger rechteckige Öffnung 400 im darstellungsgemäss oberen Teil des Koppelelements 4, welche Öffnung 400 zur Aufnahme des Verbindungssegments 51 des Substratshalters 5 und damit zur Bildung der Dreh-Steckverbindung zwischen Substrathalter 5 und Koppelelement 4 dient.

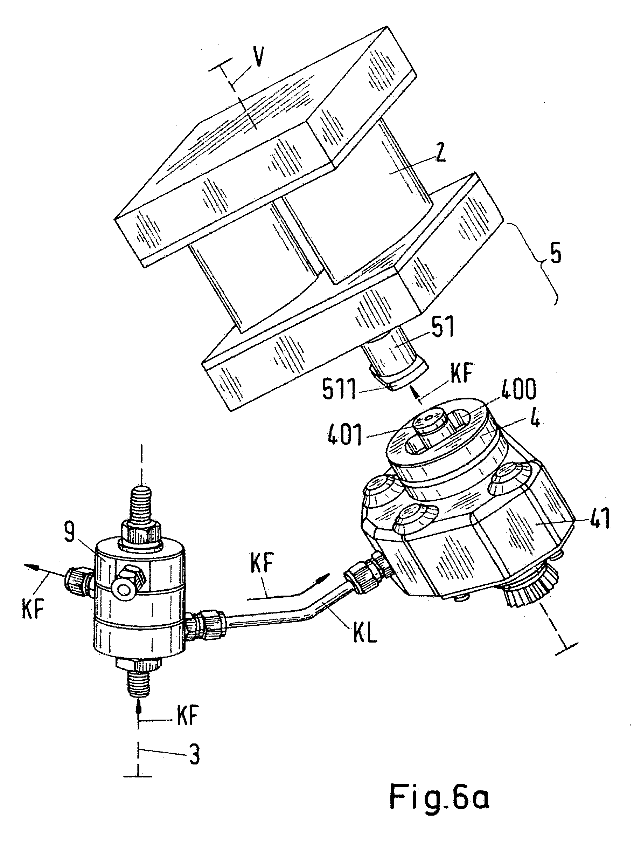

Ebenfalls zu erkennen sind die Bohrungen 101 für die keramischen Sicherungsstifte der Verdrehsicherung 10, sowie die Sichernute 111 für das Sicherungsband 11 zur Sicherung der keramischen Sicherungsstifte den Bohrungen 101, worauf in den folgenden Fig. 6a bis 6d nun noch näher eingegangen wird.

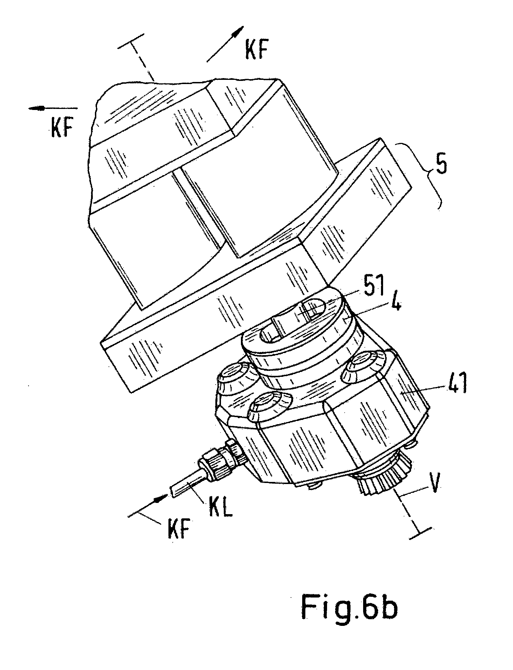

Anhand der Fig. 6a soll verdeutlich werden, wie die Steck-Dreh-Verbindung zwischen dem Verbindungssegment 51 des Substrathalters 5 und dem Koppelelement 4 hergestellt wird. Wie bereits erwähnt, hat das Koppelelement z.B. eine ungefähr rechteckförmige Öffnung 400, in die das Verbindungselement eingeführt werden kann. Wobei die Öffnung 400 selbstverständlich auch jede andere geeignete Form haben kann. Das Verbindungselement 51 hat dabei ein ebenfalls ungefähr rechteckiges Verschlussteil 511, bzw. jede andere geeignete Form, die es erlaubt, das Verschlussteil 511 ungefähr formschlüssig in einer bestimmten Orientierung in die Öffnung 400 des Koppelelements 4 eingeführt werden kann. Das Verbindungsteil 51 ist dabei im vorliegenden Beispiel hohl ausgestaltet, so dass es beim Einführen in die Öffnung 400 durch den Führungsstift 401 positioniert aufgenommen werden kann. Der Führungsstift 401 kann z.B. aus SiO₂ (Quarzgut) oder Al₂O₃ oder einem anderen Hochtemperatur beständigen Material sein. Wenn das Verbindungsteil 51 in einer vorgebbaren Tiefe in die Öffnung 400 eingeführt ist, wird der Substrathalter 5 bzw. das Verbindungsteil 51 um einen bestimmten Winkel, z.B. um 90° oder 180° oder einen anderen Winkel gedreht, wodurch das Verschlussteil 511 mit einer Verschlussnute im Inneren der Öffnung 400 in an sich bekannter Weise derart verschränkt wird, dass das Verbindungsteil 51 steckfest in der Öffnung 400 verankert ist. Das heisst, das Verbindungsteil 51 ist im Wesentlichen in Richtung der Verbindungsachse nicht mehr beweglich. Dieser Zustand ist in Fig. 6b dargestellt.

Wie der Fig. 6a ebenfalls zu entnehmen ist, hat der Führungsstift 401 eine zentrale Bohrung, durch die Kühlfluid KF über das Verbindungsteil 51 in den Substrathalter 5 geführt werden kann. Beim diesem speziellen Ausführungsbeispiel ist gemäss Fig. 6b der Substrathalter 5 derart ausgestaltet, dass das Kühlfluid KF weiter in ein Inneres des Substrats 2, das hier eine Turbinenschaufel ist, geleitet werden kann und so das Substrat 2 zum Beispiel bei einem thermischen Beschichtungsvorgang kühlt. Das Kühlfluid KF durchströmt das Substrat 2 und strömt, wie die beiden Pfeile KF andeuten sollen, schliesslich aus dem Substrat 2 heraus in die Umgebung, beispielsweise in die Prozesskammer, in der das Substrat 2 gerade beschichtet wird.

Wenn zum Beispiel die zu beschichteten Substrate 2 Turbinenschaufeln sind, so sind in diesen Turbinenschaufeln häufig Kühlbohrungen ausgebildet, durch die im Betriebszustand der Turbinenschaufel meist ein Kühlgas geleitet wird, so dass die Schaufel besser gekühlt wird. Es versteht sich, dass diese Kühlbohrungen beim Beschichtungsvorgang nicht vom Beschichtungsmaterial verschlossen werden dürfen. Daher wird bei einem erfindungsgemässen Beschichtungsverfahren das Kühlfluid KF bevorzugt über die vorgenannten Kühlbohrungen abgeführt, was den positiven Effekt hat, dass das durch die Kühlbohrungen der Turbinenschaufel ausströmende Kühlfluid KF, diese vom Beschichtungsmaterial frei hält.

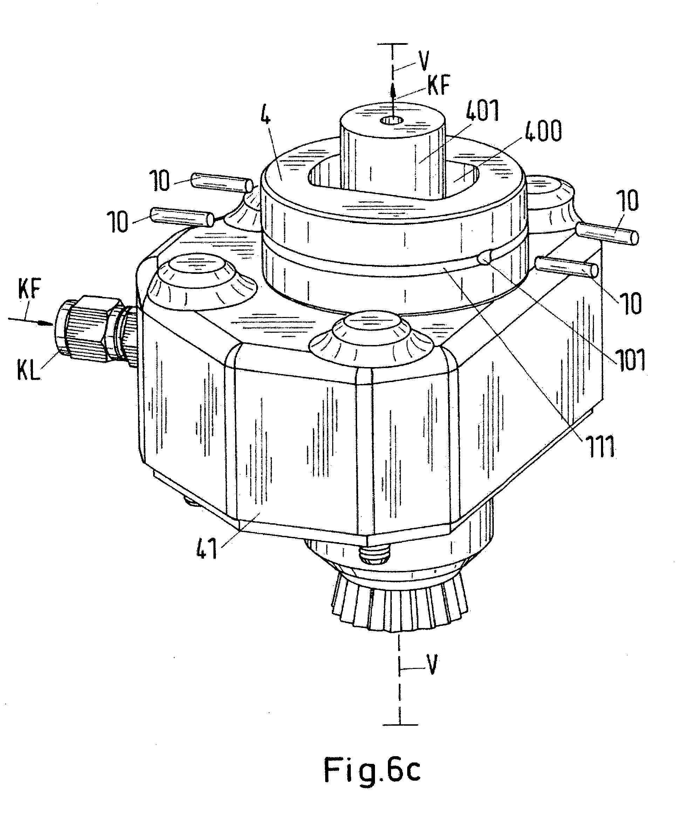

Es ist klar, dass das Verbindungsteils 51 in der Öffnung 400 nun noch gegen Verdrehung um die Verbindungsachse V gesichert werden muss, was anhand der Fig. 6c kurz erläutert wird. Ansonsten könnte es geschehen, dass sich das Verbindungsteil 51 in der Öffnung 400 derart verdreht, so dass es wieder aus der Öffnung 400 heraus gleiten kann.

Um ein Verdrehen des Verbindungsteils 51 zu verhindern, sind am Koppelelement 4 und am Verbindungsteil 51 radiale Bohrungen 101 vorgesehen, die im Einbauzustand des Verbindungsteils 51 in der Öffnung 400 derart miteinander korrespondieren, dass eine Verdrehsicherung 10 z.B. in Form eines metallischen oder keramischen Sicherungsstifts in die Bohrungen 101 des Koppelelements 4 und des Verbindungsteils 51 eingeschoben werden können, so dass die Sicherungsstifte ein Verdrehen um die Verbindungsachse V des Verbindungsteils 51 gegen das Koppelelement 4 verunmöglichen. Die Sicherungsstifte können zum Beispiel aus einem CrNi Stahl oder einem anderen geeigneten Material gefertigt sein.

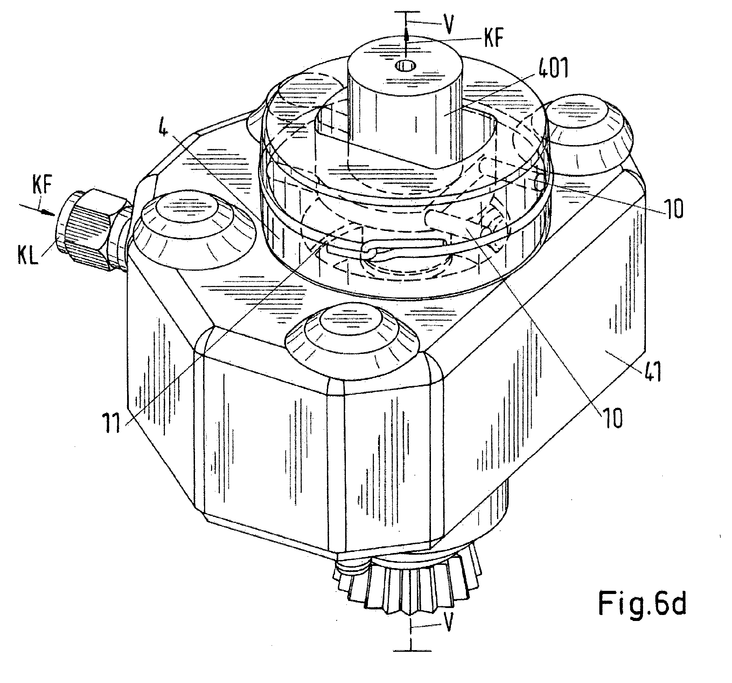

In Fig. 6d, in welchem ein darstellungsgemäss oberer Teil des Koppelelements 4 transparent dargestellt ist, ist deutlich zu sehen, wie die Verdrehsicherungen 10, also die Sicherungsstifte 10 gegen verdrehen sichern. Damit sich die Sicherungsstifte im Betriebszustand nicht aus den radialen Bohrungen lösen, also nicht herausrutschen, sind die Sicherungsstifte gemäss Fig. 6d noch mit einem Sicherungsband 11 gesichert, das in Umfangsrichtung um das Koppelelement 4 in der Sicherungsnute 111 vorgesehen ist und so ein radiales Verschieben der Sicherungsstifte 10 wirksam verhindert.

Es versteht sich dabei von selbst, dass je nach Anforderung bei einem erfindungsgemässen Bauteilmanipulator 1 entweder nur ein oder mehrere Substrathalter 5 z.B. gemäss Fig. 6b auf einem rotierbaren Koppelelement 4 angeordnet und damit um die Verbindungsachse V zusätzlich drehbar, und alle weiteren Substrathalter sind an sich bekannte Substrathalter, die einfach drehfest in Bezug auf den Bauteilmanipulator 1 angeordnet sind, also nicht zusätzlich um eine Verbindungsachse V drehbar sind. Oder aber, was in der Praxis bevorzugt der Fall sein wird, es sind alle Substrathalter 5 z.B. gemäss Fig. 6b auf einem rotierbaren Koppelelement 4 angeordnet und damit um die Verbindungsachse V zusätzlich drehbar.

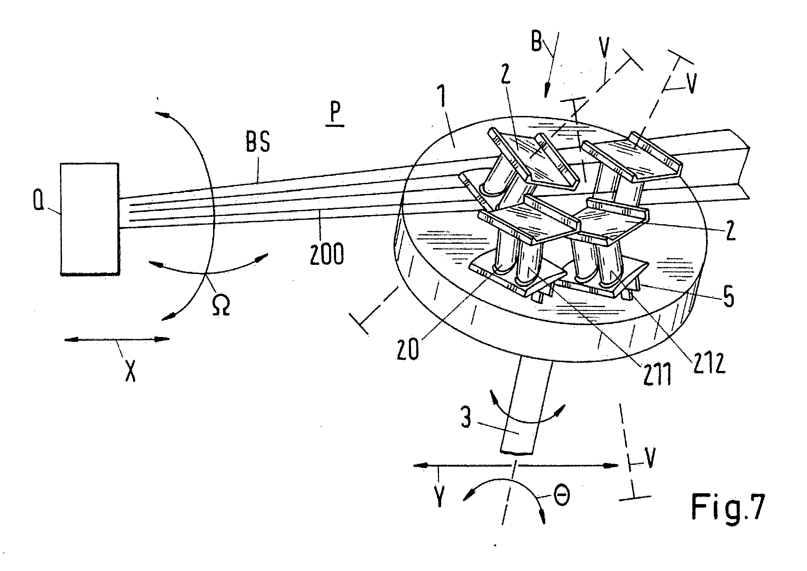

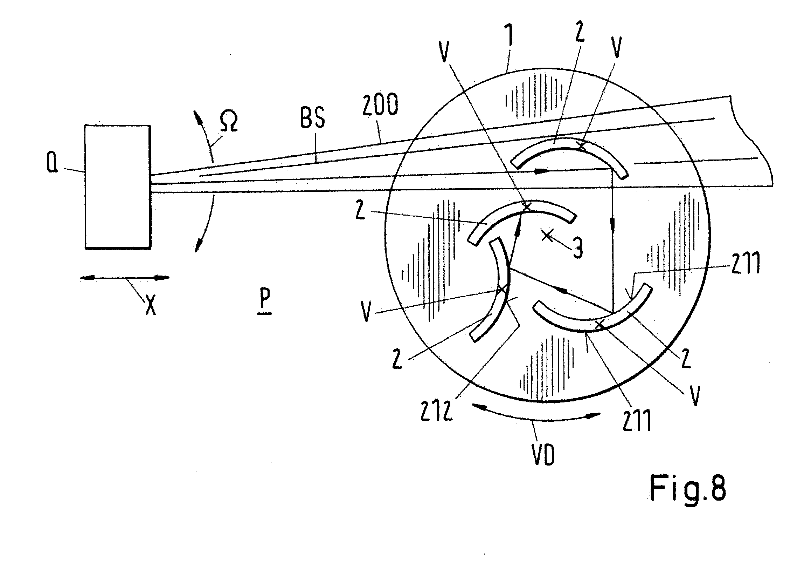

In Fig. 7 bzw. in Fig. 8 ist ein erfindungsgemässes Verfahren zur gleichzeitigen Beschichtung von mehreren Substraten 2, die hier Turbinenschaufeln 2 sind, mittels eines erfindungsgemässen Bauteilmanipulators 1 schematisch dargestellt. Aus Gründen der Übersichtlichkeit wurde bei den Fig. 7 und Fig. 8 auf die Darstellung von Einzelheiten des erfindungsgemässen Bauteilmanipulators verzichtet. Beim Bauteilmanipulator 1 der Fig. 7 bzw. Fig. 8 kann es sich zum Beispiel um einen Bauteilmanipulator gemäss Fig. 3 handeln, wobei hier anstatt drei beispielhaft vier Substrate 2 gleichzeitig beschichtbar sind.

Bei den Turbinenschaufeln 2 gemäss Fig. 7 bzw. Fig. 8 handelt es sich um sogenannte an sich bekannte Doppelschaufeln 2 für hoch belastete Flugzeugturbinen. Aus Gründen der Übersichtlichkeit wurde die Prozesskammer nicht näher im Detail dargestellt und es sind exemplarisch vier Turbinenschaufeln 2 auf dem Bauteilmanipulator 1 gezeigt. Die Fig. 8 ist dabei eine Ansicht der Fig. 7 aus Blickrichtung B und dient lediglich dem besseren Verständnis des Mechanismus der Reflexion des Beschichtungsmaterials 200. Daher bezieht sich die folgende Beschreibung gleichzeitig auf Fig. 7 und Fig. 8.

Es versteht sich, dass in der Praxis auch weniger als vier Substrate 2 auf dem Bauteilmanipulator 1 vorgesehen sein können. Es ist aber gerade ein Vorzug des erfindungsgemässen Verfahrens, sowie des Bauteilmanipulators 1 dass auch mehr als vier Substrate 2 gleichzeitig beschichtet werden können, was das Verfahren der vorliegenden Erfindung enorm effizient macht.

Anhand der Fig. 7 ist somit ein bevorzugtes Ausführungsbeispiel einer erfindungsgemässen Beschichtungsvorrichtung bzw. eines erfindungsgemässen Verfahrens zur Herstellung einer funktionalen strukturierten Schicht 20 auf einem Substrat 2 schematisch dargestellt, bei welchem Verfahren welchem in einer Prozesskammer unter einem vorgegebenen niedrigen Prozessdruck P mittels eines Plasmaspritzverfahrens, das hier ein eingangs bereits beschrieben PS-PVD Verfahren ist, ein Beschichtungsmaterial 200 in Form eines Beschichtungsstrahls BS auf eine Oberfläche 211, 212 der Substrats 2 aufgespritzt wird. Dabei wird das Beschichtungsmaterial 200 bei dem niedrigen Prozessdruck P, der im vorliegenden Beispiel bei ca. 1 mbar liegt, in ein den Beschichtungsstrahl BS defokussierendes Plasma injiziert und dort teilweise oder vollständig geschmolzen, wobei ein Plasma mit ausreichend hoher spezifischer Enthalpie erzeugt wird, sodass ein substantieller Anteil, des Beschichtungsmaterials 200 in die Dampfphase überführt wird. Der substantielle Anteil an verdampftem Material liegt hier zum Beispiel bei über 60 Gew.%. Auf dem Substrat 2 wird die strukturierte Schicht 20 gebildet. Erfindungsgemäss sind die zu beschichtenden Substrat 2 dabei auf einem oben beschriebenen erfindungsgemässen Bauteilmanipulator 1 derart angeordnet, dass eine erste Oberfläche 211 des Substrats 2 und eine zweite Oberfläche 212 des Substrats 2 so zueinander auf dem Bauteilmanipulator 1 ausgerichtet werden, dass zumindest ein Teil des in die Dampfphase übergegangenen Beschichtungsmaterials 200 beim Plasmaspritzen von der ersten Oberfläche 211 des ersten Substrats 2 auf die zweite Oberfläche 212 des zweiten Substrats 212 umgelenkt bzw. reflektiert wird, so dass die zweite Oberfläche 212 durch das von der ersten Oberfläche 211 umgelenkte bzw. reflektierte dampfförmige Beschichtungsmaterial 200 beschichtet und gleichzeitig mit Wärmeenergie versorgt wird und so auf einer ausreichenden Temperatur gehalten wird.

Der Vorgang der Reflexion des dampfförmigen Beschichtungsmaterials 200 ist dabei in der Ansicht der Fig. 8 besonders gut zu sehen. Es ist gut zu erkennen, wie eine erste Turbinenschaufel 2 umfassend die erste Oberfläche 211 und die zweite Turbinenschaufel 2 umfassend die zweite Oberfläche 212 derart auf dem Bauteilmanipulator 1 angeordnet und zueinander ausgerichtet worden sind, dass ein Teil des in die Dampfphase übergegangenen Beschichtungsmaterials 200 beim Plasmaspritzen von der ersten Oberfläche 211 des ersten Substrats 21 auf die zweite Oberfläche 212 des zweiten Substrats 2 umgelenkt bzw. reflektiert wird und diese so auch in Bezug auf den Beschichtungsstrahl BS abgeschatteten Bereich optimal beschichtet werden kann.

Dabei können eins oder mehrere der Substrate 2, wie oben beschrieben, noch zusätzlich zu der Drehung des Bauteilmanipulators 1 um seine Hauptdrehachse 3 um die Verbindungsachse V drehbar sein, so dass sich abwechselnd verschiedene Oberflächen 211, 212 reflektierend gegenüberstehen, so dass die Reflexion von der ersten Oberfläche 211 auf die zweite Oberfläche 212 nacheinander unter verschiedenen Winkeln erfolgen kann, wodurch die gebildeten funktionalen strukturierten Schichten noch gleichmässiger und in noch besserer Qualität herstellbar sind.

Je nach Anforderung ist dann auf einem erfindungsgemässen Bauteilmanipulator 1 entweder nur ein oder mehrere Substrathalter 5 z.B. gemäss Fig. 6b auf einem rotierbaren Koppelelement 4 angeordnet und damit um die Verbindungsachse V zusätzlich drehbar, und alle weiteren Substrathalter sind an sich bekannte Substrathalter, die einfach drehfest in Bezug auf den Bauteilmanipulator 1 angeordnet sind, also nicht zusätzlich um eine Verbindungsachse V drehbar sind. Oder aber, was in der Praxis bevorzugt der Fall sein wird, es sind alle Substrathalter 5 z.B. gemäss Fig. 6b auf einem rotierbaren Koppelelement 4 angeordnet und damit um die Verbindungsachse V zusätzlich drehbar.

Dabei ist die Menge an dampfförmigen Beschichtungsmaterial 200, das von der ersten Oberfläche 211 auf die zweite Oberfläche 212 umgelenkt bzw. reflektiert wird derart eingestellt, dass die zweite Oberfläche 212 auch dann auf einer vorgegebenen Oberflächentemperatur gehalten wird und ausreichend beschichtet wird, wenn die zweite Oberfläche 212 nicht unmittelbar vom Beschichtungsstrahl BS beaufschlagt wird, z.B. weil wie in Fig. 7 und Fig. 8 gezeigt, der erfindungsgemässe Bauteilmanipulator 1 während des Beschichtungsvorgangs um die Hauptdrehachse 3 mit einer vorgegebenen Drehgeschwindigkeit VD gedreht wird.

Zusätzlich zum Drehen des Bauteilmanipulators 1 um die Hauptdrehachse 3 bzw. des Substrats 2 um die Verbindungsachse V, kann der Beschichtungsstrahl BS wie in Fig. 7 bzw. Fig. 8 exemplarisch gezeigt, während des Beschichtungsvorgangs in einem vorgegebenen Raumwinkelbereich Ω über das zu beschichtende Substrat 2 hin- und hergeschwenkt werden, wodurch eine noch gleichmässigere Beaufschlagung der Substrate 2 mit dem Beschichtungsstrahl BS erreicht wird, gleichzeitig die Zeit minimiert wird, in der ein Substrat 2 nicht direkt dem Beschichtungsstrahl BS ausgesetzt ist, so dass auch eine noch gleichmässigere Temperierung der Substrate 2 erreicht wird.

Ausserdem ist bei dem vorliegenden Ausführungsbeispiel ein Abstand zwischen dem Bauteilmanipulator 1 und einer das Plasma erzeugende Plasmaquelle Q in einem vorgegebenen Wegintervall X, Y in einer oder mehreren Raumrichtungen einstellbar, indem entweder die Plasmaquelle Q entlang des Weges X in einer oder mehreren Raumrichtungen verschoben wird und / oder die Lage des Bauteilmanipulators entlang des Weges Y in ein oder mehrere Raumrichtungen verändert wird.

Ausserdem kann der Bauteilmanipulator 1 in dem speziellen Ausführungsbeispiel der Fig. 7 bzw. Fig. 8 in Bezug auf den Beschichtungsstrahl BS in einem vorgegebenen Schwenkbereich Θ verschwenkt werden.

Als Beschichtungsmaterial 200 wird z.B. ein feinkörniges an sich bekanntes Spritzpulver zur Bildung einer Wärmedämmschicht auf den Turbinenschaufeln 2 verwendet, wobei der Beschichtungsstrahl selbst bei Überschallgeschwindigkeit mit einer Schallgeschwindigkeit betrieben wird, die hier ca. 2.000 m/s beträgt, wobei sich schockartige Wellen oder Zustände im Beschichtungsstrahl 6 ausbilden können. Der Beschichtungsstrahl 6 hat im vorliegenden Beispiel eine Temperatur zwischen 6.000 K und 10.000 K.

Es versteht sich dabei von selbst, dass die Erfindung nicht auf die beschriebenen Ausführungsbeispiele beschränkt ist und insbesondere die im Rahmen dieser Anmeldung beschriebenen erfindungsgemässen Ausführungsbeispiele selbstverständlich auch in jeder geeigneten Art kombiniert werden können.

## Patentansprüche

1. Bauteilmanipulator zur dynamischen Positionierung eines in einem thermischen Behandlungsprozess zu behandelnden Substrats (2), wobei der Bauteilmanipulator eine um eine Hauptdrehachse (3) drehbare Hauptantriebsachse (30), ein Koppelelement (4) und einen mit dem Koppelelement (4) verbindbaren Substrathalter (5) umfasst, **dadurch gekennzeichnet, dass** das Koppelelement (4) ein keramisches Koppelelement (4) ist und ein Verbindungssegment (51) des Substrathalter (5) mittels einer Steck-Dreh-Verbindung zugfest und drehfest in Bezug auf eine Verbindungsachse (V) der Steck-Dreh-Verbindung mit dem Koppelelement (4) verbindbar und der Substrathalter (5) um die Verbindungsachse (V) rotierbar angeordnet ist.

2. Bauteilmanipulator nach Anspruch 1, wobei zur Aufnahme des Koppelelements (4) mit Substrathalter (5), eine mit der Hauptantriebsache (30) drehfest verbundene Grundplatte (6) vorgesehen ist.

3. Bauteilmanipulator nach Anspruch 2, wobei zur Zuleitung eines Kühlfluids (KF) die Grundplatte (6) über ein Verbindungselement (32) mit der Hauptantriebsachse (3) drehfest verbunden ist.

4. Bauteilmanipulator nach Anspruch 1 oder 2, wobei zur Aufnahme einer Mehrzahl von Substrathaltern (5) eine Mehrzahl von Koppelelementen (4) in Bezug auf die Hauptdrehachse (3) exzentrisch an der Grundplatte (6) vorgesehen ist.

5. Bauteilmanipulator nach einem der Ansprüche 1 bis 4, wobei das Koppelelement (4) zur Rotation des Substrathalters (5) über eine Antriebseinrichtung (7) mit einem Kontaktelement (8) in Wirkverbindung steht.

6. Bauteilmanipulator nach Anspruch 5, wobei die Hauptantriebsachse (30) in Bezug auf das Kontaktelement (8) drehbar angeordnet ist.

7. Bauteilmanipulator nach einem der Ansprüche 5 oder 6, wobei das Kontaktelement (8) ein an einem in Bezug auf die Hauptantriebsachse (30) feststehenden Achsenmantel (31) angeordnetes Zahnrad ist, das zum Antrieb des Koppelelements (4) mit der Antriebseinrichtung (7) verzahnt ist.

8. Bauteilmanipulator nach einem der vorangehenden Ansprüche, wobei die Verbindungsachse (V) der Steck-Dreh-Verbindung in Bezug auf die Hauptdrehachse (3) unter einem vorgebbaren Neigungswinkel (α) geneigt ist.

9. Bauteilmanipulator nach einem der Ansprüche 3 bis 8, wobei das Kühlfluid (KF) vom Verbindungselement (32) über einen auf der Grundplatte (6) angeordneten Kühlverteiler (9) und einer Kühlleitung (KL) dem Koppelelement (4) und dem Verbindungssegment (51) des Substrathalters (5) zuführbar ist.

10. Bauteilmanipulator nach einem der vorangehenden Ansprüche, wobei das Koppelelement (4) in einem Lagergehäuse (41) durch ein Lagerelement (42) gelagert ist, wobei im Lagergehäuse (41) bevorzugt drei Lagerelemente (42) vorgesehen sind, die ein Dreipunktlager bilden und wobei das Lagerelement (42) durch unmittelbaren Kontakt mit dem Kühlfluid (KF) kühlbar ist.

11. Bauteilmanipulator nach einem der vorangehenden Ansprüche, wobei das Verbindungssegment (51) mittels einer Verdrehsicherung (10) gegen ein Verdrehen in Bezug auf das Koppelelement (4) gesichert ist, wobei die Verdrehsicherung (10) insbesondere ein metallischer oder keramischer Sicherungsstift ist, der mit einem am Koppelelement (4) vorgesehenen Sicherungsband (11) gesichert ist.

12. Beschichtungsverfahren unter Verwendung eines Bauteilmanipulators (1) nach einem der Ansprüche 1 bis 11.

13. Beschichtungsverfahren nach Anspruch 12 zur Herstellung einer funktionalen strukturierten Schicht (20) auf einem Substrat (2), bei welchem in einer Prozesskammer unter einem vorgegebenen niedrigen Prozessdruck (P) mittels eines Plasmaspritzverfahrens ein Beschichtungsmaterial (200) in Form eines Beschichtungsstrahls (BS) auf eine Oberfläche des Substrats (2) aufgespritzt wird, wobei das Beschichtungsmaterial (200) bei dem niedrigen Prozessdruck (P), der kleiner als 200 mbar ist, in ein den Beschichtungsstrahl (BS) defokussierendes Plasma injiziert, und ein Plasma mit ausreichend hoher spezifischer Enthalpie erzeugt wird, sodass ein substanzieller, mindestens 5 Gew-% betragender Anteil des Beschichtungsmaterials (200) in die Dampfphase überführt wird und auf dem Substrat (2) die strukturierte Schicht (20) gebildet wird, wobei das zu beschichtendes Substrat (2) mit dem Substrathalter (5) derart rotierbar um eine Hauptdrehachse (3) angeordnet wird, dass eine erste Oberfläche (211) des Substrats (2) und eine zweite Oberfläche (212) des Substrats (2) so zueinander ausgerichtet werden, dass zumindest ein Teil des in die Dampfphase übergegangenen Beschichtungsmaterials (200) beim Plasmaspritzen von der ersten Oberfläche (211) des Substrats (2) auf die zweite Oberfläche (212) des Substrats (2) umgelenkt wird.

14. Beschichtungsvorrichtung zur Durchführung eines Verfahrens nach Anspruch 12 oder 13 zum Herstellen einer funktionalen strukturierten Schicht (20) auf einem Substrat (2), welche Beschichtungsvorrichtung eine Prozesskammer umfasst, in der unter einem vorgebbaren niedrigen Prozessdruck (P) mittels eines Plasmaspritzverfahrens ein Beschichtungsmaterial (200) in Form eines Beschichtungsstrahls (BS) auf eine Oberfläche des Substrats (2) aufspritzbar ist, wobei das Beschichtungsmaterial (200) bei dem niedrigen Prozessdruck (P), der kleiner als 200 mbar ist, in ein den Beschichtungsstrahl (BS) defokussierendes Plasma injizierbar und dort teilweise oder vollständig aufschmelzbar ist, und eine Plasmaquelle (Q) bzw. eine Plasmaquelle (Q) enthaltende Spritzpistole vorgesehen, mit welcher ein Plasma mit ausreichend hoher spezifischer Enthalpie erzeugbar ist, so dass ein substanzieller, mindestens 5 Gew-% betragender Anteil des Beschichtungsmaterials (200) in die Dampfphase überführbar und auf dem Substrat (2) die strukturierte Schicht (20) bildbar ist, **dadurch gekennzeichnet, dass** zur dynamischen Positionierung des zu behandelnden Substrats (2) ein Bauteilmanipulator nach einem der Ansprüche 1 bis 11 vorgesehen ist.

15. Verwendung eines Bauteilmanipulators (1) nach einem der Ansprüche 1 bis 11 oder einer Beschichtungsvorrichtung nach Anspruch 14 zur Beschichtung eines Substrats (2) mit einem Beschichtungsverfahren nach Anspruch 12 oder 13, wobei das Substrat (2) insbesondere eine Turbinenschaufel für eine Flugzeugturbine, für eine Gasturbine, für eine Dampfturbine oder für eine Wasserturbine ist.

## Claims

1. A component manipulator for the dynamic positioning of a substrate (2) to be treated in a thermal treatment process, wherein the component manipulator includes a main drive axle (30) rotatable about a main rotary axis (3), a connection element (4) and a substrate holder (5) connectable to the connection element (4), **characterized in that** the connection element (4) is a ceramic connection element (4) and a connection segment (51) of the substrate holder (5) is connectable to the connection element (4) in a pull resistant and rotationally fixed manner by means of a plug and rotate connection with regard to a connection axis (V) of the plug and rotate connection and the substrate holder (5) is arranged rotatable about the connection axis (V).

2. A component manipulator in accordance with claim 1, wherein a base plate (6) is provided which is rotationally fixedly connected to the main drive axle (30) for receiving the connection element (4) with the substrate holder (5).

3. A component manipulator in accordance with claim 2, wherein the base plate (6) is rotationally fixedly connected to the main drive axle (3) via a connection element (32) for the supply of a cooling fluid (KF).

4. A component manipulator in accordance with claim 1 or claim 2, wherein a plurality of connection elements (4) are eccentrically provided at the base plate (6) with regard to the main rotary axis (3) for receiving a plurality of substrate holders (5).

5. A component manipulator in accordance with any one of the claims 1 to 4, wherein the connection element (4) is in operative connection with a contact element (8) via a drive unit (7) for the rotation of the substrate holder (5).

6. A component manipulator in accordance with claim 5, wherein the main drive axle (30) is rotatably arranged with regard to the contact element (8).

7. A component manipulator in accordance with one of the claims 5 or 6, wherein the contact element (8) is a toothed wheel arranged at a shaft jacket (31) stationary with regard to the main drive axle (30) and which is toothed for the drive of the connection element (4) by means of the drive unit (7).

8. A component manipulator in accordance with any one of the preceding claims, wherein the connection axis (V) of the plug and rotate connection is tilted at a predefinable angle of tilt (α) with regard to the main rotary axis (3).

9. A component manipulator in accordance with any one of the claims 3 to 8, wherein the cooling fluid (KF) is suppliable to the connection element (4) and to the connection segment (51) of the substrate holder (5) via a cooling distributor (9) arranged on the base plate (6) and a cooling line (KL).

10. A component manipulator in accordance with any one of the preceding claims, wherein the connection element (4) is supported in a bearing housing (41) by a bearing element (42), wherein three bearing elements (42) are preferably provided in the bearing housing (41) which form a three point bearing and wherein the bearing element (42) can be cooled by means of an indirect contact with the cooling fluid (KF).

11. A component manipulator in accordance with any one of the preceding claims, wherein the connection element (51) is secured against a twist with regard to the connection element (4) by means of a security against rotation (10), wherein the security against rotation (10) is a locking pin, in particular a metallic or a ceramic locking pin, which is secured by means of a safety tape provided at the connection element (4).

12. A coating method for use of a component manipulator (1) in accordance with any one of the claims 1 to 11.

13. A coating method in accordance with claim 12 for the manufacture of a functional structured layer (20) on a substrate (2), in which a coating material (200) is sprayed onto a surface of a substrate (2) in the form of a coating beam (BS) in a process chamber at a predefined low process pressure (P) by means of a plasma spray method, wherein the coating material (200) is injected into a plasma defocussing the coating beam (BS) at a low process pressure (P), which is less than 200 mbar, and a plasma with sufficiently high specific enthalpy is generated, so that a substantial part of the coating material (200), a part of at least 5 percent by weight of the amount of the coating material, is transferred into the vapor phase and the structured layer (20) is formed on the substrate (2), wherein the substrate (2) to be coated is arranged with the substrate holder (5) rotatable about a main rotary axis (3), such that a first surface (211) of the substrate (2) and a second surface (212) of the substrate are aligned with regard to one another so that at least a part of the coating material (200) transferred into the vapor phase is deflected from the first surface (211) of the substrate (2) onto the second surface (212) of the substrate (2) on plasma spraying.

14. A coating apparatus for carrying out a method in accordance with claim 12 or claim 13 for the manufacture of a functional structured layer (20) on a substrate (2), which coating apparatus includes a process chamber in which a coating material (200) is sprayable onto the surface of a substrate (2) in the form of a coating beam (BS) at a predefinable low process pressure (P) by means of a plasma spray method, wherein the coating material (200) is injectable into a plasma defocussing the coating beam (BS) at a low process pressure (P), which is less than 200 mbar, and is partially or completely meltable there, and wherein a plasma source (Q) and/or a spray pistol including a plasma source (Q) is/are provided by means of which a plasma with a sufficiently high enthalpy is generatable, so that a substantial part of the coating material (200), a part of at least 5 percent by weight of the amount of the coating material, is transferable into the vapor phase and the structured layer (20) is formable on the substrate (2), **characterized in that** a component manipulator in accordance with any one of the claims 1 to 11 is provided for the dynamic positioning of the substrate (2) to be treated.

15. A use of a component manipulator (1) in accordance with any one of the claims 1 to 11 or of a coating apparatus in accordance with claim 14 for coating a substrate (2) with a coating method in accordance with claim 12 or claim 13, wherein the substrate (2) is in particular a turbine vane for an airplane turbine, for a gas turbine, for a vapor turbine or for a water turbine.

## Revendications

1. Robot manipulateur pour le positionnement dynamique d'un substrat (2) à traiter dans un processus de traitement thermique, ledit robot manipulateur comportant un axe d'entraînement principal (30) apte à tourner autour d'un axe de rotation principal (3), un élément de couplage (4) et un porte-substrat (5) propre à être assemblé à l'élément de couplage (4), **caractérisé en ce que** l'élément de couplage (4) est un élément de couplage (4) céramique, et un segment de liaison (51) du porte-substrat (5) peut être assemblé à l'élément de couplage (4) au moyen d'un assemblage à baïonnette, de manière résistante à la traction et immobile en rotation par rapport à un axe de liaison (V) de l'assemblage à baïonnette, et le porte-substrat (5) est disposé de manière à pouvoir tourner autour de l'axe de liaison (V).

2. Robot manipulateur selon la revendication 1, dans lequel, pour recevoir l'élément de couplage (4) avec le porte-substrat (5), il est prévu un plateau de base (6), relié de manière solidaire en rotation à l'axe d'entraînement principal (30).

3. Robot manipulateur selon la revendication 2, dans lequel, pour l'acheminement d'un fluide de refroidissement (KF), le plateau de base (6) est relié de manière solidaire en rotation à l'axe d'entraînement principal (3) par l'intermédiaire d'un élément de liaison (32).

4. Robot manipulateur selon la revendication 1 ou 2, dans lequel, pour recevoir une pluralité de porte-substrat (5), il est prévu une pluralité d'éléments de couplage (4) disposés de manière excentrée par rapport à l'axe de rotation principal (3) sur le plateau de base (6).

5. Robot manipulateur selon l'une quelconque des revendications 1 à 4, dans lequel, en vue de la rotation du porte-substrat (5), l'élément de couplage (4) est en liaison fonctionnelle avec un élément de contact (8) par l'intermédiaire d'un dispositif d'entraînement (7).

6. Robot manipulateur selon la revendication 5, dans lequel l'axe d'entraînement principal (30) est monté rotatif par rapport à l'élément de contact (8).

7. Robot manipulateur selon la revendication 5 ou 6, dans lequel l'élément de contact (8) est une roue dentée, qui est disposée de manière fixe par rapport à l'axe d'entraînement principal (30) sur une paroi latérale (31) de celui-ci et qui est dentée pour entraîner l'élément de couplage (4) avec le dispositif d'entraînement (7).

8. Robot manipulateur selon l'une quelconque des revendications précédentes, dans lequel l'axe de liaison (V) de l'assemblage à baïonnette est incliné par rapport à l'axe de rotation principal (3) en formant un angle d'inclinaison (α) prédéfinissable.

9. Robot manipulateur selon l'une quelconque des revendications 3 à 8, dans lequel le fluide de refroidissement (KF) peut être acheminé depuis l'élément de liaison (32), par l'intermédiaire d'un distributeur frigorifique (9), disposé sur le plateau de base (6), et une conduite de refroidissement (KL), vers l'élément de couplage (4) et le segment de liaison (51) du portesubstrat (5).

10. Robot manipulateur selon l'une quelconque des revendications précédentes, dans lequel l'élément de couplage (4) est monté au moyen d'un élément de palier (42) dans un carter (41) du palier, trois éléments de palier (42) étant prévus de préférence dans le carter (41), lesquels forment un palier à trois points, et l'élément de palier (42) pouvant être refroidi par contact direct avec le fluide de refroidissement (KF).

11. Robot manipulateur selon l'une quelconque des revendications précédentes, dans lequel le segment de liaison (51) est immobilisé par un système anti-rotation (10) pour éviter une rotation par rapport à l'élément de couplage (4), ledit système anti-rotation (10) étant en particulier une goupille de sécurité métallique ou céramique qui est bloquée avec une bande de sécurité (11) prévue sur l'élément de couplage (4).

12. Procédé de revêtement moyennant l'utilisation d'un robot manipulateur (1) selon l'une quelconque des revendications 1 à 11.

13. Procédé de revêtement selon la revendication 12 permettant la réalisation d'une couche (20) fonctionnelle structurée sur un substrat (2), dans lequel procédé, à l'intérieur d'une chambre de processus, un matériau de revêtement (200) est projeté, sous une basse pression (P) prédéfinie, sous la forme d'un jet de revêtement (BS) sur une surface du substrat (2) au moyen d'un procédé de projection plasma, ledit matériau de revêtement (200) étant injecté, à la basse pression (P) qui est inférieure à 200 mbar, dans un plasma défocalisant le jet de revêtement (BS), et un plasma à enthalpie spécifique suffisamment élevée est généré de telle sorte qu'une proportion substantielle, de l'ordre de 5 % en poids minimum, du matériau de revêtement (200) est transformée en phase vapeur et la couche (20) structurée est formée sur le substrat (2), ledit substrat (2) à revêtir étant disposé avec le porte-substrat (5) de manière à pouvoir tourner autour d'un axe de rotation principal (3), de telle sorte qu'une première surface (211) du substrat (2) et une deuxième surface (212) du substrat (2) sont orientées l'une par rapport à l'autre de telle sorte qu'au moins une partie du matériau de revêtement (200) transformée en phase vapeur est déviée pendant la projection plasma de la première surface (211) du substrat (2) vers la deuxième surface (212) du substrat (2).

14. Dispositif de revêtement permettant la mise en oeuvre d'un procédé selon la revendication 12 ou 13 pour la réalisation d'une couche (20) fonctionnelle structurée sur un substrat (2), lequel dispositif de revêtement comporte une chambre de processus, dans laquelle un matériau de revêtement (200) peut être projeté, sous une basse pression (P) prédéfinie, sous la forme d'un jet de revêtement (BS) sur une surface du substrat (2) au moyen d'un procédé de projection plasma, ledit matériau de revêtement (200) pouvant être injecté, à la basse pression (P) qui est inférieure à 200 mbar, dans un plasma défocalisant le jet de revêtement (BS), et y être mis en fusion partiellement ou totalement, et il est prévu une source plasma (Q), plus précisément un pistolet de projection contenant une source plasma (Q), qui permet de générer un plasma à enthalpie spécifique suffisamment élevée, de telle sorte qu'une proportion substantielle, de l'ordre de 5 % en poids minimum, du matériau de revêtement (200) peut être transformée en phase vapeur, et la couche (20) structurée pouvant être formée sur le substrat (2), **caractérisé en ce que** pour le positionnement dynamique du substrat (2) à traiter, il est prévu un robot manipulateur selon l'une quelconque des revendications 1 à 11.

15. Utilisation d'un robot manipulateur (1) selon l'une quelconque des revendications 1 à 11 ou d'un dispositif de revêtement selon la revendication 14 pour revêtir un substrat (2) au moyen d'un procédé de revêtement selon la revendication 12 ou 13, ledit substrat (2) étant en particulier une pale de turbine pour une turbine d'aéronef, pour une turbine à gaz, pour une turbine à vapeur ou pour une turbine à eau.
